# EUROPÄISCHE PATENTSCHRIFT

(11) **EP 3 479 982 B1**
(45) Veröffentlichungstag und Bekanntmachung des Hinweises auf die Patenterteilung: **22.04.2020**
(21) Anmeldenummer: 18204200.2
(22) Anmeldetag: 02.11.2018
(51) Int. Cl.: B29C 33/04, B29C 43/46, B29C 43/52, B29C 48/88, B41F 31/00, B41F 13/22, B41F 23/04, B22D 11/06

(54) **KÜHLWALZE**
COOLING ROLL
ROULEAU DE REFROIDISSEMENT

(30) Priorität: 06.11.2017 DE 102017125836
(43) Veröffentlichungstag der Anmeldung: 08.05.2019
(73) Patentinhaber: Brückner Maschinenbau GmbH & Co. KG, 83313 Siegsdorf (DE)
(72) Erfinder: Maetze, Michael, 83364 Neukirchen (DE); Edfelder, Anton, 83246 Unterwössen (DE); Lerch, Philipp, 83236 Übersee (DE); GIAPOULIS, Anthimos, 83278 Traunstein (DE)
(74) Vertreter: Flach Bauer Stahl Patentanwälte Partnerschaft mbB

(56) Entgegenhaltungen:
- EP-A1- 2 559 538
- EP-A1- 3 216 732
- WO-A1-88/04585
- CN-U- 205 112 347
- DE-A1- 19 936 077
- GB-A- 2 310 155
- US-A- 3 625 280

## Beschreibung

Kühlwalzen können in unterschiedlichen technischen Bereichen eingesetzt werden. Kühlwalzen haben vor allem Bedeutung bei der Kunststofffolienherstellung.

Dazu wird üblicherweise ein so genannter Castfilm, also ein Schmelzefilm aus einer Breitschlitzdüse an eine Kühlwalze übergeben, die sich dreht. Eine derartige Kühlwalze muss von innen her gekühlt werden, um den Castfilm auf eine optimale Temperatur zu kühlen. Zusätzlich kann die andere Seite des Schmelzefilms bei bestimmten Kunststoffen mittels Wasser in einem Wasserbad gekühlt werden.

Entsprechende Kühlwalzen sind aus dem Stand der Technik bereits bekannt. Gemäß der DE 197 05 796 C2 wird eine Kühlwalze beschrieben, die ein Doppelwandsystem mit einem äußeren Walzenkörper und einem darin befindlichen inneren Walzenkörper umfasst, wobei zwischen der Innenfläche des äußeren Walzenkörpers und der Außenfläche des inneren Walzenkörpers ein Abstandsraum gebildet wird. Dieser Abstandsraum wird von einem Kühlmedium durchströmt, wodurch der Walzenmantel entsprechend gekühlt werden kann.

Das Kühlmittel wird dabei an der einen Stirnseite der Kühlwalze zugeführt und an der gegenüberliegenden Stirnseite wieder abgeführt. Üblicherweise erfolgt dies über radiale Steigleitungen, worüber das Kühlmittel in Radialrichtung dem unterhalb des Walzenmantels liegenden Durchströmraum zugeführt wird.

Üblicherweise wird das Kühlmittel dabei über eine Längsbohrung im Wellenzapfen der Kühlwalze zugeführt, wobei über die erwähnten Steigleitungen das Kühlmittel dann in Radialrichtung nach außen strömen kann. An der gegenüberliegenden Stirnseite kann das Kühlmittel über dort vorgesehene Radialleitungen wiederum zu einer in den gegenüberliegenden Wellenzapfen vorgesehenen Ablaufleitung abströmen.

Bei der Ausführungsform gemäß der DE 197 05 796 C2 ist demgegenüber ein Zuführ- und Abströmsystem verwendet, bei welchem die Zuführleitung die gesamte Kühlwalzenwelle durchsetzt. An der zur Zuströmseite entfernt liegenden Stirnseite kann das Kühlmedium dann über die radial verlaufenden Steigleitungen nach außen fließen, um dann über die nachfolgenden Durchströmkanäle wieder in Richtung zur Zuführseite der Kühlwalze durch die unterhalb des Walzenmantels befindlichen Durchströmkanäle zurück zu strömen. Am Ende der Durchströmkanäle fließt das Kühlmedium dann über benachbart zur zuführseitigen Stirnseite des Walzenkörpers befindliche Steigleitungen in Richtung Zentralachse, um über eine in Richtung der Zentralachse verlaufenden Austrittsleitung aus dem Walzenkörper heraus zu strömen. Dazu ist der zuströmseitige Achsstummel auch als Doppelrohrleitung ausgebildet. Die Doppelrohrleitung im Achsstummel umfasst dazu beispielsweise eine von der Zentralachse durchsetzte innenliegende Zuführleitung und eine diese Zuführleitung konzentrisch umgebende Rückführleitung, über die das Kühlmedium wieder abströmen kann.

Aus der US 3 625 280 ist eine Kühlwalze bekannt geworden, die grundsätzlich ähnlich zu der vorstehend erläuterten Kühlwalze aufgebaut ist. Abweichend dazu weist jedoch die vorstehend genannte Kühlwalzenanordnung nicht parallel zur Zentralachse verlaufende Kühlkanäle auf, sondern helixförmig in dem Doppelwandsystem umlaufend angeordnete Kühlkanäle.

Mit anderen Worten wird über einen Wellenzapfen Kühlmittel der Kühlwalze zugeführt, wobei das Kühlmittel dann aus dieser Zuführleitung senkrecht über Steigleitungen im Bereich der Stirnseite der Kühlwalze nach außen strömen kann, bis es auf eine senkrecht zu der radialverlaufenden Steigleitung verlaufenden Abschlusswand trifft und von dort unmittelbar in den Zwischenraum zwischen dem Doppelwandsystem umgelenkt wird, bevor es die im Abstandsraum vorgesehenen schraubenförmig verlaufenden Kühlkanäle durchströmt.

An der gegenüberliegenden Stirnseite kann über eine entsprechende Ausbildung dann das Kühlmittel wieder über radiale Abströmleitungen benachbart zur gegenüberliegenden Stirnseite der Kühlwalze zu einem zentralen Ablaufrohr innerhalb des dortigen Walzenzapfens abströmen.

Ein insoweit weitgehend ähnlicher Aufbau ist auch aus der US 5 983 993 A zu entnehmen, die zusätzlich zu den helixförmigen Kühlkanälen noch einen über eine Zwischenwand getrennten außenliegenden Durchströmraum beschreibt, der mit in Umlaufrichtung des Walzenkörpers verlaufenden Kühlkanälen versehen ist.

Aus der WO 88/04585 A1 ist ein Verfahren und eine Vorrichtung zum Kühlen von Walzen ebenfalls als bekannt zu entnehmen. Der Aufbau ist ähnlich zu den oben beschriebenen Vorrichtungen, wobei die Umlenkungen für das Kühlmittel zwischen der Zuführleitung und den Steigleitungen bzw. zwischen den abströmseitigen Steigleitungen und der Abströmleitung und zwischen den zulaufseitigen Steigleitungen und dem Durchfluss- und Abstandsraum unterhalb des Walzenmantels und von dort zu den abströmseitigen Steigleitungen in unterschiedlichen Winkeln zueinander ausgerichtet sind. Am Übergang zwischen den Steigleitungen und dem Abstandsraum unterhalb des Kühlmantels ist eine rechtwinklige Strömungsrichtungsänderung vorgesehen.

Schließlich wird auch noch auf die gattungsbildende EP 3 216 732 A1 verwiesen, welche nicht recht-winklige Strömungsübergänge von den Zu- bzw. Ablaufrohren zu den Steigrohren sowie von den Steigrohren zu den Durchströmungskanälen unterhalb des Walzenmantels zeigt.

Aufgabe der vorliegenden Erfindung ist es eine demgegenüber nochmals verbesserte Kühlwalze bzw. Kühlwalzenanordnung zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Im Rahmen der Erfindung hat sich gezeigt, dass durch die erfindungsgemäße Ausgestaltung der Kühlwalze gegenüber herkömmlichen Kühlwalzen nochmals eine deutliche Verbesserung erzielt werden kann.

Durch die erfindungsgemäße Kühlwalze lässt sich nämlich ein Schmelzefilm, d.h. ein so genannter Castfilm mit gegenüber herkömmlichen Castfilmen deutlich besseren Eigenschaften erzeugen.

Bei den Kühlwalzen nach dem Stand der Technik hat sich nämlich gezeigt, dass der Castfilm Quermarkierungen aufweisen kann. Warum derartige Quermarkierungen im Castfilm entstehen konnten, war bisher nicht mit Sicherheit erklärbar.

Diese Quermarkierungen treten insbesondere dann an Castfilmen auf, wenn langsam laufende Kühlwalzen zum Einsatz kommen, wie zum Beispiel bei der PET-Dickfilmherstellung. Die Quermarkierungen treten v.a. dann besonders hervor, wenn die PET-Dickfilmherstellung in Folienreckanlagen erfolgt. Unter langsam laufenden Kühlwalzen werden solche verstanden, die beispielsweise mit nicht mehr als bis zu 3 Umdrehungen pro Minute rotieren, insbesondere beispielsweise mit 1 bis 2 Umdrehungen pro Minute.

Im Rahmen der Erfindung angestellte Untersuchungen haben ergeben, dass diese Quermarkierungen unterdrückt oder sogar vermieden werden können, wenn insbesondere der Kühlmittelzulauf und/oder Kühlmittelablauf zur und/oder von der Kühlwalze wie im Rahmen der Erfindung beschrieben verbessert wird.

Die Erfindung schlägt insoweit vor, in den Bereichen oder Zonen, in denen es zu einer Kühlmittel-Richtungsänderung kommt, entsprechende Maßnahmen zu ergreifen, um Turbulenzen zu vermeiden, welche sich auf den Kühlwalzen-Außenmantel übertragen.

Als eine dieser Maßnahmen ist hier der Übergang am Ende des Kühlmittel-Zulaufs (oder zu Beginn des Kühlmittel-Ablaufs) zu sehen, an welchem es für den Kühlmittelstrom zu einer Richtungsänderung kommt.

Hier ist im Stand der Technik eine 90°-Kühlmittel-Richtungsänderung vorgesehen.

Im Rahmen der Erfindung wird nunmehr vorgeschlagen, dass beim Übergang von dem axial ausgerichteten Zulauf zu den üblicherweise exakt radial verlaufenden Steigleitungen (oder von den Rückströmleitungen zu einem wiederum axial ausgerichteten Ablauf) keine exakte 90°-Strömungsrichtungsänderung vorgenommen wird, sondern eine Strömungsrichtungsänderung, die in einem Winkelbereich größer als 90° und kleiner als 180° liegt.

Dies kann beispielsweise durch die Anordnung und/oder Ausbildung einer entsprechenden Umlenkeinrichtung realisiert werden, dergestalt, dass der Kühlmittelstrom am Ende der Zuführleitung (die üblicherweise einen Wellenzapfen durchsetzt) nicht auf eine dazu senkrechte Wand trifft, sondern auf eine Umlenkeinrichtung mit einer Auftrefffläche, die in einem Winkelbereich von beispielsweise 100° bis 170° ausgerichtet verläuft. Bevorzugte Winkelbereiche liegen bei etwa 140°.

Dies kann in einer bevorzugten Ausführungsform der Erfindung beispielsweise durch Anordnung einer entsprechenden Kegelspitze in diesem Bereich realisiert werden, die konzentrisch zu einer die Walzenanordnung mittig durchsetzenden Zentralachse angeordnet ist. Die Kegelspitze kann also bevorzugt hier eine Kegelspitze mit einem Öffnungswinkel von 80° aufweisen, so dass die Kegelspitze zur Zentralachse einen Winkel von 40° bildet, wodurch die erwähnte Strömungs-Umlenkung in einem Winkelbereich von etwa 140° in Richtung der Steigrohre realisiert wird.

Anschließend kann das Steigrohr wie üblich mehr oder weniger in Radialrichtung verlaufend beginnen, bevorzugt aber auch in einem Winkel derart, dass die Strömungsrichtungsänderung in dieser unmittelbar nachfolgenden zweiten Stufe einer Strömungs-Umlenkeinrichtung ebenfalls nicht 90° beträgt, sondern größer als 90° ist, vorzugsweise größer 95° oder größer als 100°.

Möglich ist aber auch, dass die Umlenkeinrichtung Teil des Steigrohres ist, so dass das Steigrohr am Übergang vom Zulaufrohr nicht in einem 90° Winkel dazu verläuft, sondern in einem Winkelbereich von bevorzugt um 140° (also allgemein in einem Winkel zwischen bevorzugt ≥ 92° oder insbesondere ≥ 95° und ≤ 175°), so dass ein Teil der Wandung des Steigrohres als Umlenkfläche dient.

Ergänzend oder alternativ ergibt sich eine deutliche Verbesserung aber auch dann, wenn eine entsprechende nicht rechtwinklige Strömungsänderung am außenliegenden Ende der Steigrohre, also an dem der Zentralachse entfernt liegenden Ende der Steigrohre realisiert wird.

Üblicherweise trifft das Kühlmittel am Ende der Steigrohre ebenfalls auf eine senkrecht zur Strömungsrichtung verlaufende Wand, von der es dann in das Doppelwand-Kühlkammersystem der Walzenanordnung einströmen kann.

Um auch hier erfindungsgemäß eine Verbesserung herbeizuführen ist auch in diesem Bereich eine Strömungs-Umlenkeinrichtung vorgesehen, so dass das mit einer Radialkomponente nach außen durch die Steigleitung strömende Kühlmittel in einem Winkel auf eine Umlenkeinrichtung und/oder eine Innenfläche des äußeren Kühlwalzenkörpers trifft, die ebenfalls nicht rechtwinklig zur Zuströmrichtung ausgerichtet ist. Bevorzugt beträgt auch dieser Winkel wiederum einen Wert, der ≥ 92° und insbesondere ≥ 95° ist. Auch hier kann eine entsprechende Umlenkwand in einem Winkel von bevorzugt um die 140° liegen. Nach dieser Umlenkeinrichtung kann das Kühlmittel nach Vollzug einer weiteren Strömungsrichtungsänderung dann in das entsprechende Doppelwandkammersystem mit den dort vorgesehenen Kühlkanälen einströmen.

Eine weitere Verbesserung ergibt sich dann, wenn im Bereich einer Strömungs-Umlenkeinrichtung eine Beruhigungskammer vorgesehen ist, die vorzugsweise in Strömungsrichtung des Kühlmittels betrachtet unmittelbar vor der Strömungs-Umlenkeinrichtung vorgesehen und/oder ausgebildet ist. Durch eine derartige Beruhigungskammer kann sich das Kühlmittel in seinem Strömungsverhalten beruhigen, was zu einer Vergleichmäßigung des Strömungsflusses führt. Dies ist ebenfalls vorteilhaft, um Vibrationen in Bezug auf die Kühlrollen-Oberfläche zu vermeiden.

Auf der Ausströmseite kann eine entsprechende Ausbildung und Anordnung der überwiegend in radialer Richtung oder mit überwiegend radialer Komponente verlaufenden Rückführleitungen vorgesehen sein, also mit einem entsprechenden Übergang von den Kühlkanälen unterhalb des Walzenmantels in die mit einer Radialkomponente verlaufenden Rückführleitung und von dort in eine axiale Abströmleitung, die bevorzugt in dem gegenüberliegenden Wellenzapfen ausgebildet ist, in dem die Zuführleitung untergebracht ist. Im Rahmen der Erfindung könnte aber auch ein Wellenzapfen zuführleitungs- und abströmleitungsfrei ausgebildet sein, so dass nur an einem Wellenzapfen eine Zuführleitung und eine ihn konzentrisch umgebende Abströmleitung vorgesehen ist. Dabei wird im Folgenden bezüglich der Radialleitung ebenfalls von Steigleitungen gesprochen, zumal im Rahmen der Erfindung die zuführseitigen Steigleitungen wie aber auch die rückstromseitigen Steigleitungen identisch oder zumindest vergleichbar ausgebildet sind.

Im Rahmen der Erfindung wird dabei bevorzugt eine spiralförmige Anordnung der einzelnen Kühlkanäle realisiert, wobei hierbei wiederum bevorzugt degressive Kühlkanäle zur Anwendung gelangen. Unter "degressiven" Kühlkanälen versteht man solche, deren Durchströmquerschnitt von der Einström- und Abströmseite zumindest in Teilbereichen der Kühlkanäle abnimmt. Es wird allerdings bereits an dieser Stelle angemerkt, dass die Erfindung weder auf spiralförmige Anordnungen der Kühlkanäle beschränkt ist, noch auf so genannte "degressive" Kühlkanäle. Mit anderen Worten können die Kühlkanäle beliebig ausgebildet sein, um den entsprechenden Kühleffekt zu bewirken.

Ebenfalls erweist sich dabei im Rahmen der Erfindung als zusätzlich günstig, wenn benachbarte Kühlkanäle im Gegenstromprinzip vom Kühlmittel durchströmt werden. Dies kann durch entsprechende zusätzliche Leitungsanordnungen im Inneren der Kühlwalze umgesetzt werden. Die Erfindung ist aber auch nicht auf das Gegenstromprinzip beschränkt, da auch ein Gleichstromprinzip oder beliebig "gemischten" Anordnungen möglich sind, in denen beispielsweise eine oder mehrere auch benachbart liegende Kanäle im Gleichstromprinzip und andere im Gegenstromprinzip betrieben werden können.

Die Erfindung wird nachfolgend anhand von Ausführungsbeispielen näher erläutert. Dabei zeigen im Einzelnen:
- Figur 1:: eine räumliche Darstellung einer erfindungsgemäßen Kühlwalze, die zu einem Viertel im geöffneten Zustand gezeigt ist;
- Figur 2:: eine entsprechende Darstellung zu Figur 1 zur Darstellung des inneren Kühlwalzenkörpers mit den darauf befindlichen Trennstegen bzw. Trennwänden und den dadurch gebildeten Kühlkanälen (unter Weglassung des äußeren Kühlwalzenkörpers) ;
- Figur 3:: eine schematische Längsschnittdarstellung durch das Ausführungsbeispiel gemäß Figur 1;
- Figur 4:: eine vergrößerte Teildarstellung im Längsschnitt durch das erfindungsgemäße Ausführungsbeispiel;
- Figur 4a:: eine nochmals vergrößerte Detaildarstellung der erfindungsgemäßen Lösung;
- Figur 4b:: eine schematische Detaildarstellung eines leicht abgewandelten Ausführungsbeispiels mit einer leicht abgewandelten zentralen Strömungs-Umlenkeinrichtung;
- Figur 4c:: eine auszugsweise abgewandelte Darstellung einer Strömungsrichtungs-Umlenkeinrichtung;
- Figur 4d:: ein weiteres schematisch auszugsweise gezeigtes Ausführungsbeispiel bezüglich einer nochmals abgewandelten Strömungsrichtungs-Umlenkeinrichtung;
- Figur 5:: eine auszugsweise teilweise im Schnitt wiedergegebene Darstellung im Zulaufbereich unter Erläuterung einer erfindungsgemäßen zentralen Strömungs-Umlenkeinrichtung in Kegel- oder Pyramidenform;
- Figur 6:: eine schematische stirnseitige Ansicht oder Schnittdarstellung senkrecht zur Zentralachse unter Verdeutlichung der Formgebung und Ausgestaltung der Steigleitungen;
- Figur 6a:: eine auszugsweise Detaildarstellung eines äußeren Endes einer zulaufseitigen Steigleitung am Übergang zu einem Durchfluss- und Abstandsraum, in welchem die Kühlkanäle beginnen;
- Figur 6b:: eine zu Figur 6a ähnliche Detaildarstellung am Übergang von einem Durchfluss- und Abstandsraum zu einer nachfolgenden abströmseitigen Steigleitung;
- Figur 6c:: eine zu Figur 6a und 6b abweichend gezeigte Ausgestaltung einer separaten äußeren Strömungs-Umlenkeinrichtung in Form einer schräg ausgerichteten Umlenkleitfläche;
- Figur 6d:: eine entsprechende Darstellung zu Figur 6c, in der jedoch die Strömungsrichtungen des Kühlmittels am Übergang zur ersten und zweiten Strömungs-Umlenkeinrichtung mit dargestellt sind;
- Figur 7a:: eine schematische auszugsweise Abwicklung des Abstands- und Durchflussraums unter Weglassung des äußeren Walzenkörpers und der Darstellung des Beginns der Kühlkanäle und der in diesem Bereich endenden außen liegenden Öffnungen der Steig- und Rücklaufleitungen;
- Figur 7b:: eine entsprechende Darstellung zu Figur 7a, bei der die einzelnen Kühlkanäle jedoch eine zusätzliche Zwischenwand aufweisen und als Doppelkanäle ausgebildet sind;
- Figur 8a:: eine zu Figur 7a ähnliche Darstellung der Kühlkanäle, jedoch für den Fall, dass die Kühlkanäle im Gegenstromprinzip mit Kühlmedium durchströmt werden;
- Figur 8b:: eine entsprechende Darstellung zu Figur 7b, mit Zwischenwand versehenen Kühlkanälen, die ebenfalls im Gegenstromprinzip vom Kühlmittel durchströmt werden;
- Figur 9:: eine axiale Schnittdarstellung durch ein abgewandeltes Ausführungsbeispiel unter Ausbildung einer Kühlwalze mit im Gegenstromprinzip betreibbaren Kühlkanälen;
- Figur 10:: eine räumliche Darstellung einer weiteren erfindungsgemäßen Kühlwalze mit einem Viertel im aufgeschnittenen Zustand, mittels der die benachbarten Kühlkanäle im Gegenstromprinzip betreibbar sind.

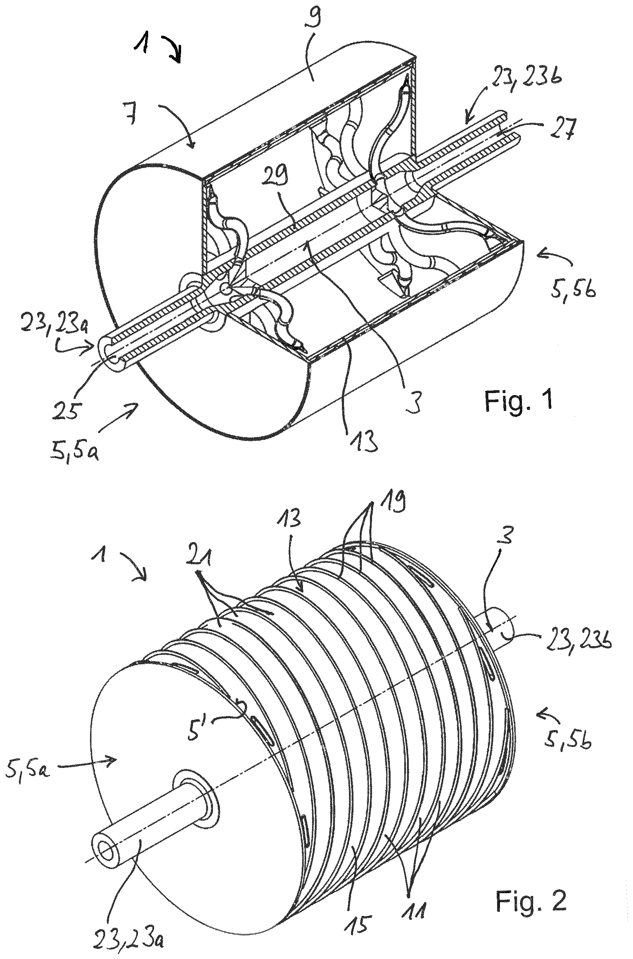

Nachfolgend wird auf ein erstes Ausführungsbeispiel anhand der Figuren 1 bis 5 Bezug genommen.

Gezeigt ist eine Kühlwalze 1, mit zwei längs einer die Kühlwalze 1 mittig durchsetzenden Zentralachse 3 versetzt zueinander liegenden Stirnseiten 5, d.h. Stirnseiten 5a, 5b, zwischen denen ein äußerer und innerer Walzenkörper verläuft.

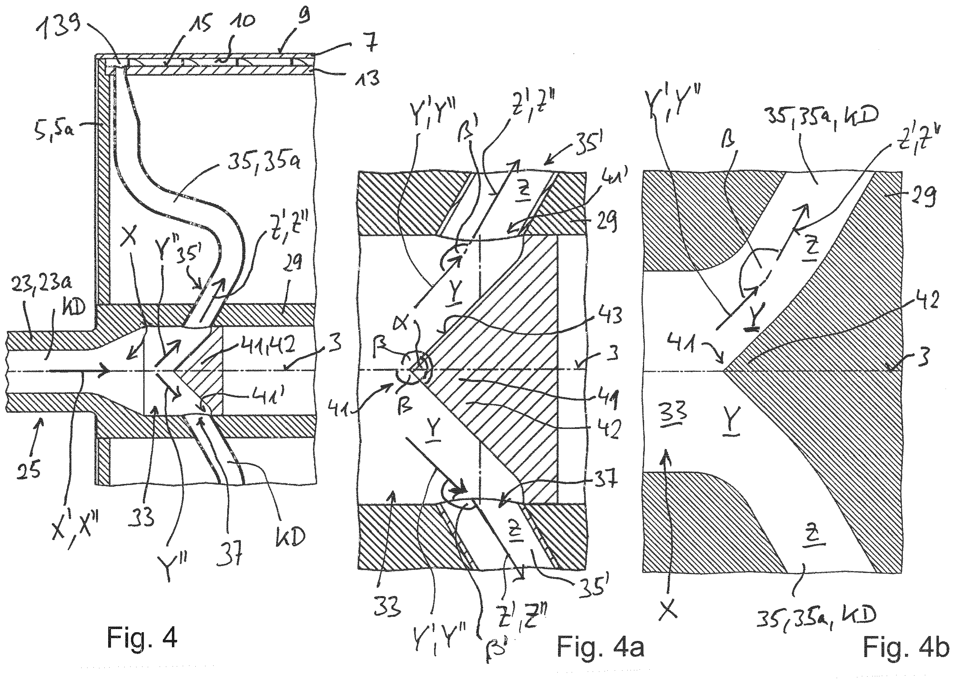

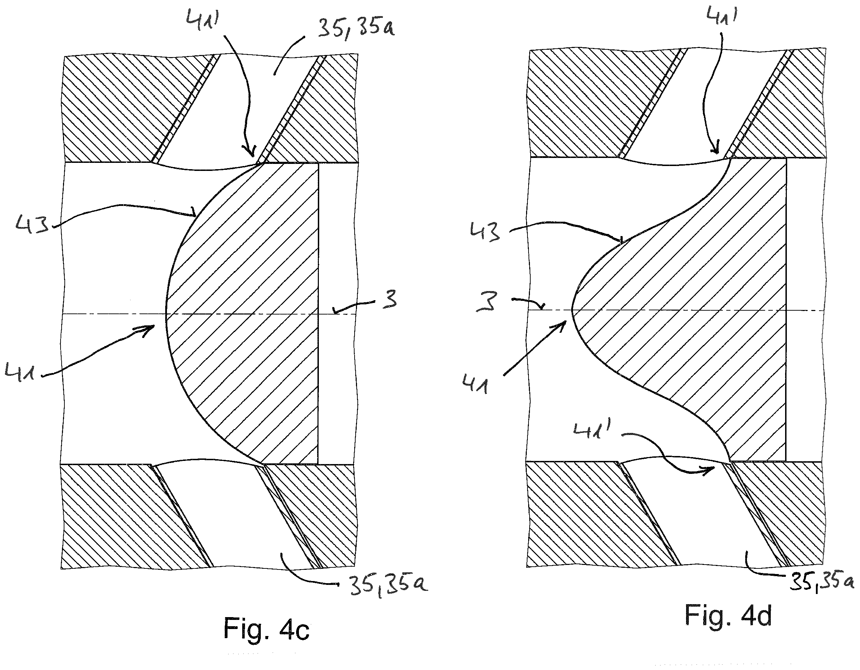

Der äußere Walzenkörper 7 ist mit den beiden Stirnseiten 5, d.h. 5a und 5b fest und dicht verbunden. Der äußere Walzenkörper 7 ist hohlzylinderförmig gestaltet und weist eine äußere Kühlfläche 9 auf, die also nach außen weist und von außen zu sehen ist, sowie eine innere Kühlfläche 10, die einem eigentlichen Durchflussraum 11 zugewandt liegt, welcher - worauf nachfolgend noch ausführlich Bezug genommen wird - von einem Kühlmedium durchströmbar ist. Es wird insoweit insbesondere auch schon auf Figur 4 verwiesen.

Beabstandet zu dem äußeren Walzenkörper 7 ist ein innerer Walzenkörper 13 vorgesehen, also mit gegenüber dem äußeren Walzenkörper 7 geringerem Außendurchmesser. Der innere Walzenkörper 13 ist ebenfalls hohlzylinderförmig gestaltet und weist eine äußere Walzenfläche 15 auf, die in Richtung des äußeren Walzenkörpers 7 ausgerichtet liegt, sowie eine dazu innere Walzenfläche 16, die in Richtung Zentralachse 3 liegt (wobei in Figur 4 eine auszugsweise Längsschnittdarstellung durch die Kühlwalze mit dem äußeren und inneren Walzenkörper gezeigt ist).

Auch der innere Walzenkörper 13 ist mit den Stirnseiten oder Stirnwänden 5a, 5b fest und dicht verbunden. Somit ist also zwischen der äußeren Walzenfläche 15 des inneren Walzenkörpers 13 und der inneren Kühlfläche 10 des äußeren Walzenkörpers 7 ein Abstandsraum 17 gebildet, der auch als Durchflussraum 11 bezeichnet wird und der in Betrieb vom Kühlmedium durchströmt wird. Dabei wird bereits an dieser Stelle angemerkt, dass der Gesamtaufbau der Kühlwalze 1 koaxial zur Zentralachse 3 ausgebildet ist, so dass der innere Walzenkörper 13 koaxial zur Zentralachse 3 und koaxial zu dem ihn umgebenden äußeren Kühlkörper 7 angeordnet ist, ebenso wie die nachfolgend noch erörterten Walzenstummel.

Zwischen dem äußeren Walzenkörper 7 und dem inneren Walzenkörper 13 sind noch eine Reihe von Trennstegen oder Trennwänden 19 vorgesehen, die beabstandet zueinander angeordnet sind, wodurch eine Vielzahl von separaten Kühlkanälen 21 gebildet werden.

Diese Kühlkanäle 21 können grundsätzlich im Wesentlichen über fast die gesamte Strecke zwischen den aufeinander zuweisenden Innenseiten 5' (Figur 4) der beiden Stirnseiten oder Stirnwände 5a, 5b in Parallelausrichtung zur Zentralachse 3 verlaufen, wie dies grundsätzlich aus der DE 197 05 796 C2 bekannt ist.

Um jedoch einen besseren Kühleffekt zu erzielen verlaufen die Kühlkanäle 21 bevorzugt helixförmig, d.h. zwischen dem äußeren und dem inneren Walzenkörper 7, 13 schraubenförmig. Dazu sind die Trennstege oder Trennwände 19 schraubenförmig verlaufend in dem Abstandsraum 17 ausgebildet und mit der äußeren Walzenfläche 15 des inneren Walzenkörpers 13 und der inneren Kühlfläche 10 des äußeren Walzenkörpers 7 fest und dicht verbunden, wie sich dies insbesondere auch aus der räumlichen Darstellung gemäß Figur 2 unter Weglassung des äußeren Walzenkörpers 7 ergibt.

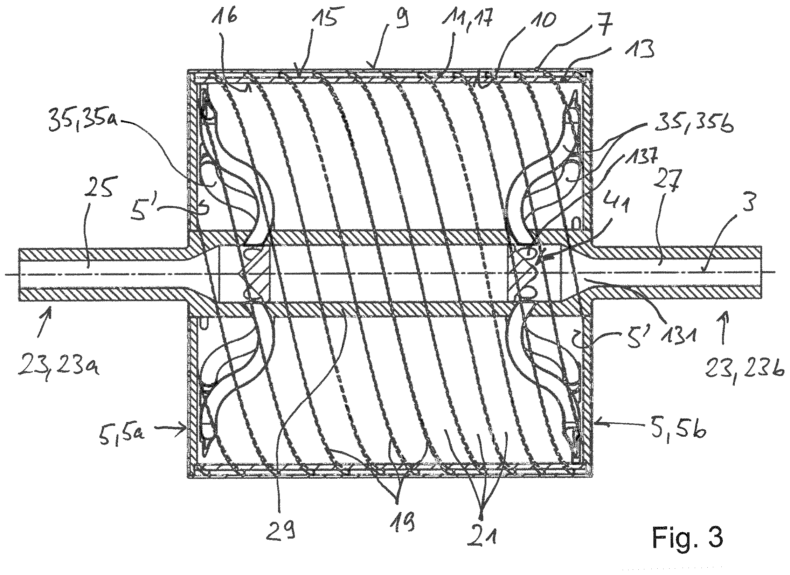

Wie aus den Darstellungen ferner zu ersehen ist, insbesondere auch aus Figur 3, steht über jede der beiden Stirnseiten 5a und 5b ein Walzenstummel 23 über, nämlich im gezeigten Ausführungsbeispiel ein erster Walzenstummel 23a und ein an der gegenüberliegenden Stirnseite 5b vorgesehener Walzenstummel 23b.

Der in den Figuren 1 bis 3 beispielsweise links liegende Walzenstummel 23a dient gleichzeitig auch als Zuführleitung 25 zur Zuführung von einem Kühlmedium. Dazu ist der Walzenstummel 23a hohlzylinderförmig oder rohrförmig ausgestaltet, wobei die Zuführleitung 25 mittig von der Zentralachse 3 durchsetzt ist.

Im gezeigten Ausführungsbeispiel ist dabei ferner der rechtsliegende Walzenstummel 23b mit einer Ausströmleitung 27 versehen, die ebenfalls koaxial zur Zentralachse 3 in den hohlzylinderförmig ausgebildeten Walzenstummel 23 ausgebildet ist. Hierüber kann das Kühlmedium abfließen.

Aus den Darstellungen ist auch ersichtlich, dass die beiden längs der Zentralachse 3 miteinander fluchtend angeordneten Walzenstummel 23a, 23b Bestandteil eines die Kühlwalze 1 durchsetzenden Achskörpers 29 sind. Die Walzenstummel 23a, 23b können dabei einteilig mit der Kühlwalze 1 verbunden ausgebildet sein. Möglich ist aber auch, dass die Walzenstummel 23a, 23b mit dem Walzenkörper fest verbunden sind, ggf. lösbar oder unlösbar. Möglich ist ferner beispielsweise eine Anbringung der Walzenstummel 23a, 23b an der Kühlwalze 1 mittels einer Schraubverbindung. Bezüglich der Befestigung der Walzenstummel an dem Körper der Kühlwalze kommen alle erdenklichen Methoden in Betracht.

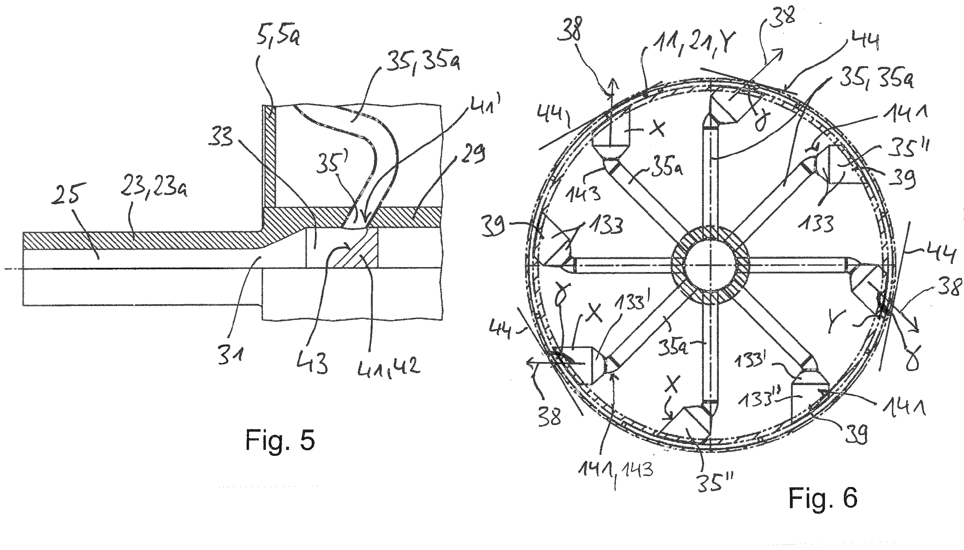

Ferner ist insbesondere aus der Querschnittsdarstellung gemäß Figur 4 und 5 auch zu ersehen, dass die Zuführleitung 25 vor ihrem Ende über eine Durchflussöffnung 31 in einen Verbindungs- oder Verzweigungsraum 33 (hier innerhalb des Achskörpers 29 bzw. des Walzenstummels 23a) übergeht, wobei am Ende der Zuführleitung 25 mehrere in Umfangsrichtung versetzt zueinander angeordnete Steigleitungen 35, 35a abzweigen. Hierüber kann dann - worauf nachfolgend noch im Detail eingegangen wird - ein Kühlmedium über die Zuführleitung 25 im Walzenstummel 23a, in den am Ende der Zuführleitung 25 vorgesehenen Verbindungs- oder Verzweigungsraum 33 und/oder in die Zuführöffnungen 37 zu Beginn der mehreren Steigleitungen 35a strömen, die an ihrem außenliegenden Ende über eine Austrittsöffnung 139 mit dem Durchflussraum 11, d.h. den beginnenden Kühlkanälen 21 in Verbindung stehen.

Der erwähnte Verbindungs- oder Verzweigungsraum 33 kann letztlich auch als Vorhof- und/oder Beruhigungskammer oder Beruhigungszone 33 bezeichnet werden, die einen größeren Durchflussquerschnitt aufweist als der Durchflussquerschnitt der dem Verzweigungsraum oder der Beruhigungskammer 33 vorgelagerten Abschnitt der Zuführleitung 25. Dabei kann die Beruhigungskammer 33 entweder eine in Durchströmrichtung vorgelagerte trichterförmige Erweiterung 33' (wodurch der Durchflussquerschnitterweitert wird) und/oder den erwähnten, mit einem größeren Rohrquerschnitt versehenen und dabei bevorzugt zylinderförmig ausgebildeten Kammerabschnitt 33" umfassen. Diese trichterförmige Erweiterung 33' und/oder den zylinderförmigen Kammerabschnitt 33" umfassende Beruhigungskammer 33 führt zu einer weiteren erfindungsgemäßen Verbesserung. Diese Ausgestaltung des Verzweigungsraumes ermöglicht nämlich, dass das Kühlmittel sich in seinem Strömungsverhalten "beruhigen" kann, was zu einer Vergleichmäßigung des Strömungsflusses führt. Dies ist ebenfalls vorteilhaft, um Vibrationen in Bezug auf die Kühlrollen-Oberfläche zu vermeiden.

Um die Qualität eines Schmelzefilms auf einer Kühlwalze zu verbessern, ist es notwendig, dass die Strömungsübergänge von der Zuführleitung 25 in die Steigleitung 35a und/oder von der jeweiligen Steigleitung 35a in den Durchflussraum 11 bzw. die dort beginnenden Kühlkanäle 21 bestimmte Bedingungen erfüllen. Dies gilt alternativ und insbesondere ergänzend auch für die Abströmseite, die vom Grundsatz her entsprechend der Zulaufseite ausgebildet ist oder sein kann.

Letztlich wird durch den Gesamtaufbau von der Zuführleitung 25, die nachfolgenden zulaufseitigen Steigleitungen 35a, dem Durchlauf- und Abstandsraum 11, 17 mit den dort ausgebildeten Kühlkanälen 21 der Ablaufseitigen Steigleitung 35b und der Ausströmleitung 27 eine im Inneren der Kühlwalze verlaufendes Kühlmittel-Durchflussleitungssystem KD gebildet. Dieses Kühlmittel-Durchflussleitungssystem KD weist gegenüber dem Stand der Technik abweichende erfindungsgemäße Strömungsübergänge an diversen Stellen auf, an denen das Kühlmittel-Durchflussleitungssystem KD eine Strömungsrichtungsänderung für das darin durchströmende Kühlmittel bewirkt.

Wie sich insbesondere aus der vergrößerten Detaildarstellung gemäß Figur 4, 4a, 4b oder 5 ergibt ist nunmehr im Rahmen der Erfindung im oder am Ende der Beruhigungskammer 33, also am Übergang von der Zuführleitung 25 zu den mehreren Steigleitungen 35, 35a eine zentrale Strömungs-Umlenkeinrichtung 41 vorgesehen, und zwar im gezeigten Ausführungsbeispiel in Form eines Umlenkkegels oder beispielsweise einer Umlenkpyramide 42. Alternativ kann die zentrale Strömungs-Umlenkeinrichtung 41 auch kurvenförmig/gekrümmt (strömungsgünstig) oder (halb-)kugelförmig oder z.B. tropfenförmig etc. ausgestaltet sein. Dies ist beispielhaft ohne Einschränkung hierauf anhand auszugsweiser schematischer Querschnittsdarstellungen gemäß Figur 4c und 4d gezeigt. Speziell kann die Spitze der Strömungs-Umlenkeinrichtung abgerundet oder spitz sein. Mit anderen Worten kann die umlaufende Fläche um die Zentralachse 3 konkave und/oder konvexe Strömungsleitflächen 43 oder Strömungsleitflächen-Abschnitte 43 aufweisen. Bezogen auf die Zentralachse kann die Strömungs-Umlenkeinrichtung 41 rotationssymmetrisch ausgebildet sein oder mit mehreren in Umfangsrichtung versetzt liegenden Umlenk- oder Strömungsleitflächen oder Strömungsleitflächen-Abschnitten 43 versehen sein, die ein Ablenken des Kühlmediums in die nachfolgenden Steigleitungen 35, 35a ermöglicht und/oder unterstützt.

Der oben erwähnte Umlenkkegel 42 bzw. die Umlenkpyramide 42 weist also zumindest eine umlaufende Strömungsleitfläche 43 auf, die im gezeigten Ausführungsbeispiel im Längsschnitt einen spitzen Winkel von etwa 40° (+/- 5° oder weniger) zur Zentralachse 3 bildet. Dadurch ergibt sich ein gesamter Öffnungswinkel des Umlenkkegels 42 bzw. der Umlenkpyramide 42 von 80°.

Dies heißt umgekehrt, dass das Kühlmedium (das längs der Zentralachse 3 gemäß Pfeilrichtung 45 die Zuführleitung 25 in Richtung der Zentralachse 3 durchströmt und über die Durchflussöffnung 31 am Ende der Zuführleitung 25 in die Beruhigungskammer oder Beruhigungszone 33 einströmt) dann auf die Strömungs-Umlenkeinrichtung 41 mit der gegenüber der Strömungsrichtung gemäß Pfeildarstellung in einem Winkel β von etwa 140° geneigten Strömungsleitflächen oder Strömungsleitflächen-Abschnitte 43 trifft und entsprechend der Pfeilrichtung Y', Y" in Figur 4 ab- oder umgelenkt wird.

Auf jeden Fall wird dadurch vermieden, dass das Kühlmedium bzw. der zentrale Strömungsvektor des Kühlmediums senkrecht auf eine Umlenkwand trifft, um dann beispielsweise exakt radial durch die Steigleitungen 35a zu den Kühlkanälen 21 umgelenkt zu werden, wie dies im Stand der Technik üblich ist.

Mit anderen Worten ist also die Strömungsleitfläche 43 der Umlenkeinrichtung 41 gegenüber dem letzten Abschnitt X der Zuführleitung 25 (also des Zuführrohres 25) vorzugsweise in Form der Beruhigungskammer 33 und/oder die Erstreckungsrichtung X' des Endes des Zuführrohres 25 und/oder die Strömungsrichtung X" des Kühlmittelstroms nicht orthogonal sondern schräg oder winkelig ausgerichtet. Erfindungsgemäß ist also die Strömungsleitfläche 43 gegenüber dem letzten Abschnitt X der Zuführleitung 25 und/oder der Erstreckungsrichtung X' des Endes des Zuführrohres 25 und/oder der Strömungsrichtung X" des Kühlmittelstroms gegenüber der in einem bestimmte Winkelbereich β geneigt ausgerichtet.

Die Strömungs-Umlenkeinrichtung 41 und/oder der Neigungswinkel β gegenüber den Richtungen X, X' und/oder X" soll zumindest 92°, 93°, 94°, 95° oder zumindest 100° betragen, vorzugsweise zumindest 110°, 120°, 130°, 140°, 150°, 160° oder zumindest 170°. Andererseits soll dieser Winkel β ≤ 178°, 177°, 176°, 175° oder zumindest ≤ 170° sein, insbesondere ≤ 160°, 150°, 140°, 130°, 120° oder 110° sein.

Auf eine derartige Strömungs-Umlenkeinrichtung 41 folgt dann unmittelbar ein (gegebenenfalls sehr kurzer) Leitungsabschnitt Y mit einer Erstreckungsrichtung Y' unter Erzeugung einer Strömungsrichtung Y" für den Kühlmittelstrom, und zwar überwiegend parallel zur Strömungsleitfläche 43.

Unter Verwendung einer derartigen zentralen Strömungs-Umlenkeinreichung 41 könnte dann das Kühlmedium direkt in die jeweilige Zuführöffnung 37 der entsprechend geneigten Steigleitungen 35, 35a parallel zum Neigungswinkel β einströmen, so dass mit anderen Worten das Kühlmedium gegenüber der Ausrichtung der Strömungsleitfläche 43 keine weitere oder zusätzliche Strömungsrichtungsänderung erfahren würde.

Im gezeigten Ausführungsbeispiel ist jedoch unmittelbar auf die erste Strömungs-Umlenkeinrichtung 41 folgend eine zweite Strömungs-Umlenkeinrichtung 41' vorgesehen. Es kann insoweit auch von einer zweistufigen Strömungs-Umlenkeinrichtung 41 und 41' gesprochen werden.

Durch die zweite Strömungs-Umlenkeinrichtung 41' erfährt das Kühlmedium noch eine weitere Strömungsrichtungsänderung um einen weiteren Winkel β'.

Durch diese zweite Strömungs-Umlenkeinrichtung 41' könnte z.B. eine Winkeländerung von 130° erzeugt werden, wenn die Steigleitung 35a mit ihrer Zulauföffnung 37 exakt radial, also im 90°-Winkel gegenüber der Zentralachse 3 ausgerichtet wäre. Der entsprechende Umlenkwinkel β' zwischen der Ausrichtung der Zulauföffnung 37 der Steigleitung 35a oder der die Leitfläche 43' bildende Begrenzungswand der Steigleitung 35a (auf die das einströmende Kühlmittel hin strömt) zum einen und der entsprechenden Leitfläche 43 an der zentralen Strömungs-Umlenkeinrichtung 41 kann ebenfalls zumindest 92° betragen. Vorzugsweise soll und kann der Winkel β' all jene Werte annehmen, die oben auch für den Winkel β genannt wurden.

Mit anderen Worten ist an der erläuterten Übergangsstelle (und dies gilt gleichermaßen auch für alle nachfolgend erläuterten Übergangsstellen) eine weitere zentrale Strömungsrichtungsänderung 41'vorgesehen, und zwar zwischen dem der zweiten Strömungs-Umlenkeinrichtung 41' unmittelbar vorausgehenden Kühlleitungsabschnitt Y mit seiner Erstreckungsrichtung Y' und der dadurch erzeugten Kühlmittel-Strömungsrichtung Y" und einem anfänglichen nächsten Kühlmittelleitungsabschnitt Z, beispielsweise in Form des zulaufseitigen Abschnitts des Steigrohrs 35a. Zwischen der Richtung Z' des zulaufseitigen Abschnitts des Steigrohrs 35a und dem vorausgehenden Ausrichtung Y' des Leitungs- oder Strömungsabschnittes Y ist ein Winkel β' gebildet, der in der erläuterten Größenordnung liegt. Dadurch erfährt der Kühlmittelstrom eine weitere Richtungsänderung Y".

Abweichend vom geschilderten Aufbau kann aber auch die zweite Strömungs-Umlenkeinrichtung 41' dadurch gebildet sein, dass eine physikalisch gesehen separat ausgebildete Kühlmittel-Umlenkeinrichtung vorgesehen ist, wie sie beispielsweise anhand der Figur 4 oder 4a in Form eines dort verwendeten Kegels oder einer Pyramide 42 für die erste zentrale Strömungs-Umlenkeinrichtung 41 beschrieben und gezeigt ist.
Mit anderen Worten kann die Richtungsänderung an der erläuterten Stelle zwischen der Zulaufleitung 25 und beispielsweise den Steigrohren 35, 35a einstufig mit einem Winkel β erfolgen, oder beispielsweise auch zwei- oder mehrstufig. Geht man beispielsweise davon aus, dass das Kühlmittel in der Zulaufleitung 25 gemäß Pfeil X" strömt, so kann die Richtungsänderung des Kühlmittelstromes wie erwähnt auch in mehreren Stufen oder Schritten dadurch durchgeführt werden, dass das Kühlmedium in einem letzten Kühlleitungsabschnitt X der Zuführleitung 25 (in der bevorzugt die erwähnte Beruhigungskammer 33 ausgebildet ist) beispielsweise eine erste Richtungsänderung mit einem Winkel β (gegenüber der Umlenkeinrichtung 41) und eine nachfolgende zweiten Umlenkung an einer weiteren Umlenkeinrichtung erfährt. Diese weitere Umlenkung des Kühlmittelstroms kann dadurch erzeugt werden, dass die Einströmrichtung der Steigleitung 35, 35a in einem weiteren Winkel β' gegenüber der Umlenkrichtung 41 ausgerichtet ist. Genauso kann an Stelle einer ein- oder mehrstufigen Umlenkeinrichtung auch eine gekrümmte Umlenkeinrichtung vorgesehen sein, mit der eine gewünschte Steuerungsrichtungsänderung durchführbar ist.

Diese allgemeinen Aussagen gelten gleichermaßen auch für alle nachfolgend erörterten Strömungs-Umlenkeinrichtungen, die jeweils so realisiert sein können, dass ein entsprechender Kühlmittelleitungsabschnitt X mit einer Erstreckungsrichtung X' unter Erzeugung eines Kühlmittelstromes in Richtung X" mittels der Strömungs-Umlenkeinrichtung in einen nachfolgenden Kühlmittel-Leitungsabschnitt Y mit einer Erstreckungsrichtung Y' übergeht, wodurch das Kühlmittel in eine Strömungsrichtung Y" umgelenkt wird. Der Ablenkwinkel soll dabei größer oder gleich 92° und kleiner oder gleich 178° sein.

Bei Bedarf kann sich daran bevorzugt unmittelbar eine zweite Strömungs-Umlenkeinrichtung derart anschließen, dass der Kühlmittelleitungsabschnitt Y mit seiner Erstreckungsrichtung Y' unter Erzeugung des Kühlmittelstromes in Richtung Y" mittels der Strömungs-Umlenkeinrichtung in einen nachfolgenden Kühlmittel-Leitungsabschnitt Z mit einer Erstreckungsrichtung Z' übergeht, wodurch das Kühlmittel in eine Strömungsrichtung Z" umgelenkt wird.

Wie aus den Zeichnungen auch zu ersehen ist, wird zwar von einem Verbindungs-, Verzweigungs- oder Beruhigungsraum 33 gesprochen, der aber physikalisch gesehen keinen separaten Raum bilden muss sondern letztlich nur der Bereich am Übergang von der Zuführleitung 25 in die Steigleitungen 35a darstellt. Von daher muss auch eine so genannte zentrale Strömungs-Umlenkeinrichtung 41 nicht als separate Einrichtung oder Maßnahme vorgesehen sein. Die zentrale Strömungs-Umlenkreinrichtung 41 kann letztlich durch die Geometrie des Übergangs von der Zuführleitung 25 zu der jeweiligen Steigleitung 35a gebildet sein, insbesondere dann, wenn die entsprechenden Zuführöffnungen 35 zu den Steigleitungen 35a bzw. ein anfänglicher Rohrabschnitt 35' der Steigleitung 35a und/oder die zugehörigen Wandflächen der Zulaufleitungen und der Steigleitungen in einem entsprechenden Winkel β zueinander ausgerichtet sind. Dies ist beispielhaft in Figur 4b am erhöhten Übergang zwischen einer Zuführleitung 25 und einer einzelnen Steigleitung 35a dargestellt. Denn insbesondere die Wandausrichtung am Anfang des Steigrohres 35a bildet eine Strömungsleitfläche 43', auf die der Kühlmittelstrom entsprechend der Pfeildarstellung 45 in einem Winkel β auftrifft, wodurch eine Umlenkung im gewünschten Bereich sichergestellt wird. Von daher kann die erwähnte zentrale Strömungs-Umlenkeinrichtung 41 unterschiedlichst ausgebildet und/oder vorgesehen sein.

Mit anderen Worten wird bei der Variante gemäß Figur 4b die hier vorgesehene einstufige Umlenkeinrichtung 41 nur durch die Ausrichtung des Einlaufs des Steigrohres 35a gebildet, so dass ein Teil des Eingangs dieser Steigleitung 35 letztlich die Strömungsleitfläche 43 umfasst oder bildet, die der Strömungsleitfläche 43 im Ausführungsbeispiel gemäß Figur 4 oder 4a entspricht, und bei diesem Ausführungsbeispiel gemäß Figur 4 oder 4a Teil der kegelförmigen Umlenkeinrichtung 41 ist.

Aber auch wenn eine zentrale Strömungs-Umlenkeinrichtung 41 beispielsweise in Form des erwähnten Umlenkkegels 42 oder der Umlenkpyramide 42 vorgesehen ist, muss die Eintrittsöffnung und ein anfänglicher Rohrabschnitt 35 der Steigleitung 35a nicht zwingend rechtwinklig zur Zentralachse 3 verlaufen, also nicht zwingend exakt radial.

Auch hier kann gleichwohl noch ein anfänglicher Rohrabschnitt 35' (Figur 4a) der Steigleitung 35a schräg zur Zentralachse 3 verlaufend ausgerichtet sein, also mit einer Komponente, die in Radialrichtung und in Richtung der Zentralachse verläuft (wie in Figur 4a vergrößert dargestellt).

Bei dem Ausführungsbeispiel gemäß Figur 4b ist ferner zu ersehen, dass die Strömungs-Umlenkeinrichtung 41 beispielsweise auch in Form einer Umlenkpyramide oder eines Umlenkkegels 42 integraler Bestandteil des Achskörpers 29 und dabei bevorzugt unmittelbarer Teil des Beginns der Steigleitung 35a sein kann.

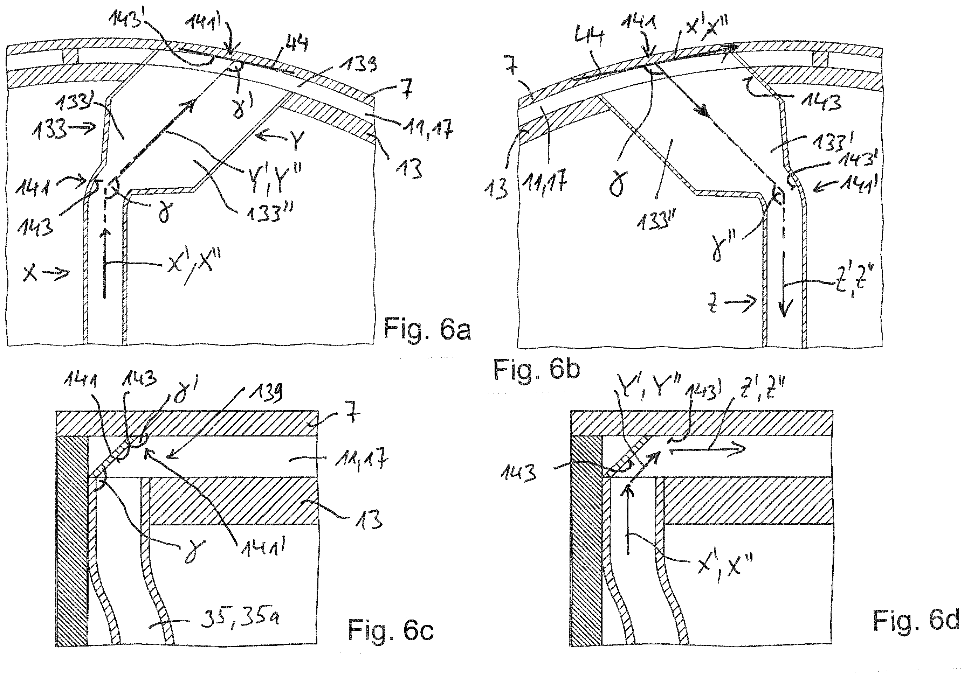

Anhand von Figur 6 und 6a bis 6d wird nunmehr erläutert, wie der Übergang an dem außenliegenden Ende der Steigleitung 35a zu dem Durchflussraum 11 insbesondere in Form der Kühlkanäle 21 ausgestaltet ist oder sein kann.

Während beim Stand der Technik diese Steigleitungen 35a radial und damit senkrecht in den Abstandsraum 17 und damit in den Durchflussraum 11 münden, ist nunmehr im Rahmen der Erfindung vorgesehen, dass hier die betreffende Steigleitung 35a eine Krümmung und/oder ein- oder mehrstufige Abwinkelung mit einer Komponente in Umfangsrichtung und/oder einer Komponente in Längsrichtung der Kühlwalze 1 erfährt.

Die hier unter Bezug auf die Figuren 6, 6a und 6b gezeigte sogenannte äußere Strömungs-Umlenkeinrichtung ist ebenfalls zweistufig aufgebaut und umfasst eine erste Strömungs-Umlenkeinrichtung 141 und eine unmittelbar darauf folgende zweite Strömungs-Umlenkeinrichtung 141'.

Die erste äußere Strömungs-Umlenkeinrichtung 141 besteht aus einem Rohr- oder Leitungsbogen, auch Krümmer genannt. Der Bogenwinkel dieses Abschnitts ist so gewählt, dass hier zumindest eine Srömungsrichtungsänderung mit einem Winkel γ erzeugt wird, der wiederum größer oder gleich 92° und kleiner oder gleich 178° ist. Die gekrümmte äußere Rohrwand dient dabei als Strömungsleitfläche 143

Mit anderen Worten ist also ein Abschnitt Y der Steigleitung 35, 35a und/oder die Erstreckungsrichtung Y' der Steigleitung 35, 35a und/oder die Strömungsrichtung Y" des Kühlmittelstroms unmittelbar nach der ersten äußeren Umlenkeinrichtung 141 (am Ende der Steigleitung 35, 35a hier in Form einer weiteren Beruhigungskammer 33) in einem Winkel γ gegenüber einem Abschnitt X der Steigleitung 35, 35a und/oder der Erstreckungsrichtung X' der Steigleitung 35, 35a und/oder die Strömungsrichtung X" des Kühlmittelstroms unmittelbar vor der ersten äußeren Umlenkeinrichtung 141 geneigt.

An diese ersten äußeren Umlenkeinrichtung 141 schließt sich die erwähnte zweite äußere Umlenkeinrichtung 141' an, und zwar dergestalt, dass die Austrittsöffnung 139 am Ende der Steigleitung 35a und damit am Ende der hier ebenfalls vorgesehenen Beruhigungskammer 133 nicht rechtwinklig zu dem weiteren Strömungsverlauf in dem Abstandsraum 17 bzw. den Kühlkanälen 21 ausgerichtet ist. Mit anderen Worten verläuft also Ausströmrichtung 38 des Kühlmittelstromes X aus der Steigleitung 35a und damit aus der Beruhigungskammer 33 nicht exakt radial zur Zentralachse 3, sondern mit einer Komponente in Umfangs- und/oder Längsrichtung der Kühlwalze. Wie aus der auszugsweisen schematischen Darstellung gemäß Figur 6 und/oder Figur 6a zu ersehen ist, wird zwischen der Strömungsrichtung 38 und damit der Ausrichtung des letzten Rohrabschnitts X der Steigleitung 35a und eine in diesem Bereich an dem Außenmantel der Kühlwalze 1 gebildeten Tangente 44und/oder zum Verlauf der inneren Kühlfläche 10 des äußeren Walzenkörpers 7 und damit auch zum Verlauf des Abstandsraumes 17 ein Winkel γ' gebildet, der auf keinen Fall 90° beträgt. Dieser Winkel γ' soll wie der Winkel β oder β' in einem Bereich von zumindest mehr als 92° und bevorzugt weniger als 178° liegen. Dabei bildet der Beginn des Durchlauf- und Abstandsraumes 11, 17, in dem die Kühlkanäle 21 ausgebildet sind, wiederum den nachfolgenden leitungsabschnittabschnitt Z, in welchem das Kühlmittel an oder unmittelbar nach der zweiten Umlenkstelle einströmt, so dass zwischen dem der zweiten Strömungs-Umlenkeinrichtung 141' unmittelbar vorausgehenden Leitungsabschnittabschnitt Y (also der Steigleitung 35a im Bereich der Beruhigungskammer 133) und dem nach der Umlenkung vorgesehenen nachfolgenden Strömungsabschnittes Y der gewünschte Winkel γ' in der angegebenen Größenordnung gebildet ist.

Auch bei der Variante gemäß Figur 6 und 6a sind also zwei unmittelbar aufeinanderfolgende äußere Strömungs-Umlenkeinrichtung 141 und 141' so ausgebildet, dass für jede der beiden Strömungs-Umlenkeinrichtung 141 und 141' eine rechtwinklige Strömungsrichtungsänderung vermieden wird.

Anhand von Figur 6c und 6d ist eine Abwandlung für die erste äußere Strömungs-Umlenkeinrichtung 141 gezeigt.

Auch hier erfolgt eine zweistufige Richtungsänderung des Kühlmittellaufs, nämlich in einer ersten Stufe durch die Ausrichtung der ersten äußeren Strömungsumlenkeinrichtung 141 (unter Verwendung einer Strömungsleitfläche 143, die in einem Winkel γ gegenüber der Erstreckungsrichtung X' und damit gegenüber der Strömungsrichtung X" des Kühlmittels ausgerichtet ist). Dadurch wird der Kühlmittelstrom in Richtung Y' abgelenkt (Figur 6d). Die zweite Stufe der äußeren Strömungs-Umlenkeinrichtung 141' ist zwischen der Strömungsleitfläche 143 der ersten äußeren Strömungs-Umlenkeinrichtung 141 und der Ausrichtung Z' des Durchfluss- und Abstandsraums 11, 17 mit den Kühlkanälen 21 gebildet. Dieser Übergang bildet dann die zweite äußere Strömungsumlenkeinrichtung 141', bei der der Kühlmittelstrom auf die innere Kühlfläche 10 der Kühlwalze trifft und eine weitere Richtungsänderung Z" mit einem Winkel γ' durch die Strömungsleitfläche 143' erfährt (Figur 6d). Die Strömungsleitfläche 143' wird dabei durch die Kühlfläche 10. Bei der erwähnten zumindest zweistufigen Richtungsänderung soll also der Winkel γ und der weitere Winkel γ' im Bereich der auch für den Winkel β oder β' angegebenen Werte liegen. Bei der Variante gemäß Figur 6a und 6b wäre noch eine einstufige Richtungsänderung vorgesehen, und zwar mit einem Winkel γ, der ebenfalls dann wieder im Rahmen der Erfindung die Werte aufweisen soll, wie sie für den Winkel β oder β' angegeben wurden.

Dabei kann der letzte Abschnitt der jeweiligen Steigleitungen 35a (also der nach außen weisende Rohrabschnitt) auch in diesem Ausführungsbeispiel ebenfalls in Form der erwähnten Beruhigungskammer 133 ausgebildet sein, deren Formgebung und Funktion vergleichbar zu dem auch als Beruhigungskammer 33 bezeichneten Verzweigungsraums 33 ist. Mit andern Worten kann dieser letzte Rohrabschnitt in Form der Beruhigungskammer 133 einen trichterförmigen Übergangsbereich 133' und/oder einen z.B. zylinderförmigen Kammerabschnitt 133" umfassen der ebenfalls einen vergrößerten Durchflussquerschnitt aufweist verglichen mit dem vorausgehenden Durchflussquerschnitt der Steigleitung 35a. Sofern der trichterförmige Übergangsabschnitt 133' vorgesehen ist, ist der in Strömungsrichtung ebenfalls von der Steigleitung 35a kommend mit seiner divergierenden Öffnungsbereich in Durchflussrichtung ausgerichtet.

Die erwähnte erste Strömungs-Umlenkeinrichtung 141 kann also z.B. gemäß Figur 6c in Form einer zusätzlichen Einrichtung realisiert oder aber gemäß Figur 6 und 6a durch die entsprechende Verwendung eines Rohrkrümmers gebildet sein. Anstelle der zweiten Strömungs-Umlenkeinrichtung 141' kann das Ende des Steigrohres 35a insgesamt nach Art eines Rohrkrümmers ausgebildet sein, worüber der Kühlmittelstrom kontinuierlich bis zum Eintritt in den Durchflussraum 11 und damit in den Abstandsraum 17 umgelenkt wird, also sukzessive unter Vermeidung einer rechtwinkligen Richtungsänderung.

Mit anderen Worten kann also das Kühlmedium in Richtung Durchflussraum 11 und damit in die Eintrittsöffnung der Kühlkanäle 21 zumindest mit einer tangentialen Komponente hierin einströmen, wodurch eine vibrationsärmere Durchströmung der Kühlwalze mit Kühlmedium erzielt wird, was sich wie erläutert positiv auf die abzukühlende Kunststoffschmelze, d.h. den Castfilm auswirkt.

Aus der Schilderung geht also hervor, dass eine separate äußere Strömungs-Umlenkeinrichtung 141 (Figur 6c) vorgesehen sein kann, die aber wie anhand von Figur 6 und 6a erläutert auch durch einen Teil des Übergangs zwischen dem Steigrohr 35a und dem Abstandsraum 17 gebildet sein kann. Mit anderen Worten wirken also die entsprechenden Flächen der hier ineinander übergehenden Räume unmittelbar als Strömungsleitflächen. Im geschilderten Ausführungsbeispiel würde also bevorzugt die innere Kühlfläche 10 des äußeren Walzenkörpers 7 die entsprechende Strömungsleifläche 143' bilden, die mit der Strömungsleitfläche 43 43' oder 143 in ihrer Wirkung vergleichbar ist.

Eine entsprechende Ausgestaltung und Ausrichtung der ablaufseitigen Rückführleitungen 35b (Figur 1 und 6b) über eine außenliegende Eintrittsöffnung 139 mit einer Einströmrichtung 38 (so dass das über die Kühlkanäle 21 kommende Kühlmittel hier außenliegend in die Rückführleitungen 35b einströmen kann) sowie am Übergang zu der den zweiten Walzenstummel 23b durchsetzenden Ausströmleitung 27 (siehe Figur 3) ist bevorzugt entsprechend oder identisch ausgebildet zu der zulaufseitigen Gestaltung der Kühlwalze 1. Mit anderen Worten ist auch hier bevorzugt außenliegend zumindest eine äußere Strömungs-Umlenkeinrichtung 141 und bevorzugt noch eine nachfolgende zweite Strömungs-Umlenkeinrichtung 141' am Zugang zu den Rückführleitungen 35b sowie eine zentrale Strömungs-Umlenkreinrichtung 41 bevorzugt mit einer zweiten Strömungs-Umlenkreinrichtung 41' am Übergang zwischen den innenliegenden Austrittsöffnungen 137 an den Rückführleitungen 35b und der Eintrittsöffnung 131 am innenliegenden Ende der Ausströmleitung 27. Dabei ist durch die Ausrichtung des letzten Abschnittes des Durchfluss- und Abstandsraums 11, 17 bzw. des dort ausgebildeten Endes der Kühlkanäle 21 (die einen letzten Durchfluss- oder Rohrabschnitt X bilden) und der Eintrittsöffnung 139 bzw. der entsprechenden Ausrichtung der Wandung eines anfänglichen Rohrabschnittes Y der Rückführleitung 35b bzw. der hier vorgesehenen Beruhigungskammer 133 die Strömungs-Umlenkeinrichtung 141 gebildet, so dass die aus dem Durchflussraum 11 bzw. den dort vorgesehenen Kühlkanälen 21 austretende Kühlflüssigkeit in einem Winkel γ umgelenkt wird und entsprechend in die Eintrittsöffnung 139 der Rückführleitungen 35a eintritt. Die Umlenk- oder Beruhigungskammer 133 kann auch in diesem Falle wieder ein- oder zumindest zweiteilig gebildet sein, nämlich mit einer einen größeren Durchlaufquerschnitt aufweisenden z.B. zylinderförmigen Beruhigungsabschnitt oder Beruhigungszone 133" und/oder einem sich in Richtung der Rückführleitung 35b daran anschließenden trichterförmigen Erweiterungsabschnitt 133'. Auch dies dient wieder letztlich der Beruhigung des Strömungsflusses, wie anhand der anderen Beruhigungskammern erläutert, insbesondere um möglicherweise ansonsten auftretende Vibrationen weiter zu dämpfen oder sogar zu vermeiden. Es handelt sich dabei um ein zusätzliches Merkmal zu der nicht rechtwinkligen Ausrichtung der Strömungsrichtungsänderungen. Der von dem Kühlmittelstrom beaufschlage Wandungsabschnitt der Beruhigungskammer 133 dient insoweit auch als Umlenkung des Kühlmittelstroms dienende Strömungsleitfläche 143', vergleichbar der Strömungsleitfläche 43 bei der Umlenkeinrichtung 41.

Wie für die Zulaufseite erörtert, insbesondere anhand von Figur 6a, kann auch hier die Umlenkeinrichtung 141 durch die winklige Ausrichtung zwischen der inneren Kühlfläche 10 und der Ausrichtung des Beginns der Rückführleitung 35b bzw. der dort vorgesehenen Beruhigungskammer 133 gebildet sein. Ergänzend und/oder alternativ könnte auch ein bogenförmiger Krümmungsabschnitt zwischen der Ausrichtung des Durchflussraumes 11 zum Übergang zu den Rückführleitungen 35, 35b oder wie anhand von Figur 6b gezeigt ist am Übergang von der Beruhigungskammer 133 zu dem nachfolgenden Abschnitt der Rückführleitung 35b mit einem gegenüber der Beruhigungskammer 133 geringeren Rohrquerschnitt vorgesehen sein, wie dies auch anhand der Zuführseite beschrieben wurde.

Wegen des grundsätzlich gleichen Aufbaus an der Zulaufwie an der Ablaufseite werden von daher die oben definierten Rückströmleitung 35b teilweise auch als Steigleitungen 35b bezeichnet.

Auch an dieser Umlenkstelle kann, wie anhand von Figur 6b gezeigt ist, also eine zweistufige Strömungs-Umlenkeinrichtung 141, 141' vorgesehen sein und zwar unter Erzeugung der erwähnten ersten Winkeländerung γ (zwischen dem Ausgang der Kühlkanäle 21 und dem Eintritt in die Beruhigungskammer 133 als Teil der Rückströmleitung 35b) und unter Erzeugung der erwähnten zweiten Winkeländerung γ' (zwischen der Beruhigungskammer 133 und dem anfänglichen nachfolgenden Rohrabschnitt Y am Beginn der ablaufseitigen Rückströmleitung 35b). Oder es kann ähnlich wie für die zulaufseitigen Steigleitungen 35a anhand von Figur 6c gezeigt auch eine zweistufige Strömungsrichtungs-Umlenkeinrichtung 141 und 141' unter Verwendung einer schräg zur ankommenden Kühlmittel-Strömung verlaufenden Strömungsleitfläche 143 vorgesehen sein, wodurch eine erste Winkeländerung γ erzeugt wird. Die nachfolgende zweite Winkeländerung γ' wird durch den nachfolgenden winkeligen Übergang bzw. den hier vorgesehenen Krümmer im nächsten Abschnitt der Rückströmleitung 35b bewirkt. Die Winkel γ und γ' weisen ebenfalls wieder die für die Winkel β und β' angegebene Größenordnung auf. Nur der Vollständigkeit halber wird erwähnt, dass für alle angegebenen Winkeländerungen im Rahmen der Erfindung also grundsätzlich nicht nur ein- oder zweistufige sondern auch mehrstufige Winkeländerungseinrichtungen vorgesehen sein können, beispielsweise auch welche, die mit einer kontinuierlichen Winkeländerung einhergehen, nämlich in Form eines mehr oder weniger gekrümmt verlaufenden Strömungsübergangs aufgrund einer bogenförmigen oder gekrümmten Strömungs-Umlenkeinrichtung.

Ebenso ist bevorzugt ein Übergang zwischen den rücklaufseitigen Steigleitungen 35b und der in dem zweiten Achsstummel 23b vorgesehenen Ausströmleitung 27 vorgesehen. Auch hier ist zwischen dem letzten Rohrabschnitt der Steigleitung 35b am Übergang zur Ausströmleitung 27 wiederum zumindest eine zentrale Strömungs-Umlenkeinrichtung 41 vorgesehen, wobei die Strömungsrichtung im Austrittsbereich der Steigleitung 35b und/oder die Öffnung (Austrittsöffnung für das Kühlmittel an dieser Stelle) der Steigleitung 35b am Übergang zur Ausströmleitung 27 und/oder die Strömungsrichtung des Kühlmittels in diesem Bereich in einem Winkel β gegenüber der dortigen Strömungsleitfläche 43 an der zentralen Strömungs-Umlenkeinrichtung 41 ausgerichtet, die auch hier wiederum bevorzugt aus einem zentralen Umlenkkegel oder einer zentralen Umlenkpyramide 42 bestehen kann. Ist die Strömungs-Umlenkeinrichtung 41, 41' zweistufig ausgebildet, nämlich mit einer ersten und einer nachfolgenden zweiten Strömungs-Umlenkeinrichtung, so wird eine zweistufige Richtungsänderung für den Kühlmittelstrom erzeugt, nämlich mit einem ersten Winkel β und einem nachfolgenden zweiten Winkel β' im zweiten Schritt.

Die Anzahl der zulaufseitigen Steigleitungen 35a und die Anzahl der abströmseitigen Rückströmleitungen 35b richten sich nach der Anzahl der Kühlkanäle 21. Bei insgesamt n Kühlkanälen sind n Steigleitungen 35a und n Rückführleitungen 35b vorgesehen. Im gezeigten Ausführungsbeispiel sind also an der Zulaufseite wie aber auch an der Rücklaufseite jeweils acht Steigleitungen 35a bzw. 35b vorgesehen, wobei jede Steigleitung mit einem Kühlkanal 21 in Verbindung steht. Somit umfasst das Ausführungsbeispiel zumindest acht Kühlkanäle 21. Grundsätzlich sind aber auch Ausbildungen denkbar, in denen beispielsweise nur vier Kühlkanäle oder umgekehrt beispielsweise auch 16 Kühlkanäle und mehr vorgesehen sind. Beliebige Zwischenzahlen für die Anzahl der Kühlkanäle sind ebenso möglich. Es handelt sich hierbei nur um nichteinschränkende Beispiele.

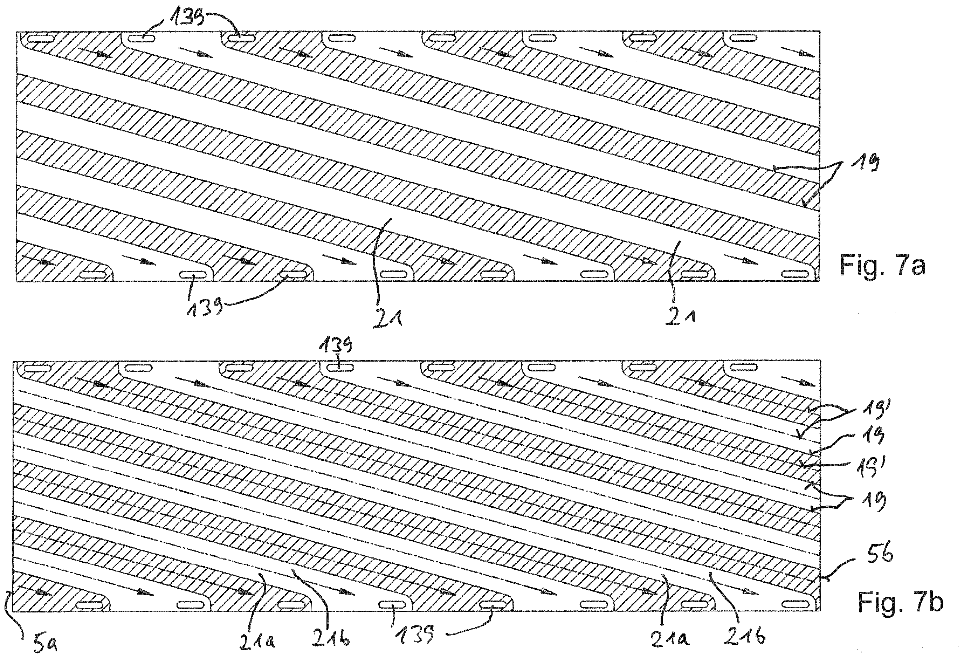

Aus der abgewickelten Darstellung der Kühlmittelkanäle gemäß Figur 7a ist zu ersehen, wie jede Ausströmöffnung 139 am Ende der Zuführleitungen 35a mit einem zugeordneten Kühlkanal 21 in Verbindung steht, wobei in Strömungsrichtung am Ende des jeweiligen Kühlkanals 21 eine weitere Austrittsöffnung 139 vorgesehen ist, worüber das Kühlmittel dann in die Rücklaufleitungen 35b einströmen kann. Die einzelnen Kühlkanäle 21 sind dabei durch die erwähnten Trennwände 19 voneinander getrennt. In Figur 7a sind dabei benachbarte Kühlkanäle zur besseren Unterscheidung einmal mit Querstreifen und einmal ohne Querstreifen dargestellt.

Aus der vergrößerten abgewickelten Draufsicht gemäß Figur 7b ist allerdings auch zu ersehen, dass in einer Abwandlung zu Figur 7a die Austrittsöffnungen 139, die nachfolgend kurz auch nur als Öffnungen 139 bezeichnet werden, am äußeren Ende der jeweiligen Steigleitungen 35a (wie aber die entsprechende Eintrittsöffnung oder Öffnung 139) am äußeren Ende der Rückführleitungen 35b, also der rückführseitigen Steigleitung 35b, jeweils mit zwei parallel zueinander verlaufenden Kühlkanälen 21 in Verbindung steht. Mit anderen Worten weist somit jeder Kühlkanal 21 noch eine Zwischen-Trennwand 19' auf. Insoweit kann auch von Doppelkühlkanälen 21a, 21b gesprochen werden, die jeweils mit einer zulaufseitigen Steigleitung 35a und einer ablaufseitigen Steigleitung 35b zugeordnet sind (Figur 7b).

Aus den Darstellungen gemäß Figur 2, 7a und 7b ist auch zu ersehen, dass durch die trichterförmige Erweiterung am Übergang des jeweiligen Steigrohrs 35a, 35b zum Abstandsraum 17 die entsprechenden Öffnungen 139 zum Abstandsraum 17 langlochähnlich gestaltet sind. Aus Figur 7b ist auch zu ersehen, dass die Zwischen-Trennwand 19' bereits vor der Stirnseite oder Stirnwand 5a, 5b endet, damit das Kühlmittel problemlos zwischen Steigleitung und den beiden durch die Zwischen-Trennwand 19' voneinander getrennten einzelnen Kühlkanäle21 die zu einem Kühlkanalpaar gehören, problemlos ein- bzw. ausströmen kann.

Anhand von Figur 7a sind also separate einkanalige Kühlkanäle 21 beschrieben, wohingegen anhand von Figur 7b jeweils zusammengehörende doppelte Kühlkanäle 21a, 21b gezeigt sind, die über eine gemeinsame Zuführöffnung 139 beströmt und über eine Rückführöffnung 139 auf der Ablaufseite entleert werden. In beiden Fällen findet das so genannte Gleichstromprinzip Anwendung, bei dem die Kühlkanäle alle in paralleler Ausrichtung zueinander in gleicher Richtung vom Kühlmedium durchströmt werden, wie durch die Strömungspfeile angedeutet ist.

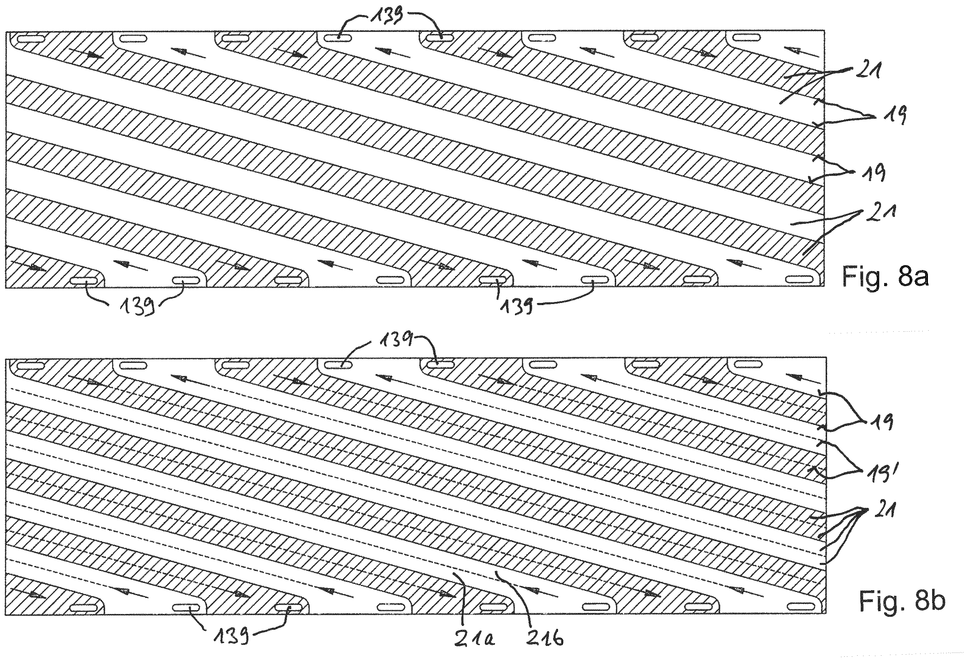

Möglich ist aber ebenso die Realisierung eines Gegenstromprinzips, bei dem jeweils zwei benachbarte Kühlkanäle in Gegenstromrichtung durchströmt werden. Dabei können wieder einkanalige Strömkanäle wie anhand von Figur 7a oder beispielsweise durch eine Trennwand 19 voneinander getrennte doppelte Kühlkanäle 21a, 21b vorgesehen sein. Unabhängig davon ist aber auch hier jeweils das Gegenstromprinzip realisierbar, wie es anhand von Figur 8a bzw. Figur 8b gezeigt ist.

Das Gegenstromprinzip bezüglich der Kühlkanäle 21 bzw. 21a, 21b (unabhängig ob die Variante gemäß Figur 8a oder 8b realisiert wird) erfordert jedoch die unterschiedliche Zufuhr von Kühlmedium an den betreffenden stirnseitigen Bereichen der Kühlwalzen. Auch die Rückführleitungen müssen dann an beiden Stirnseitenbereichen der Kühlwalze vorgesehen sein.

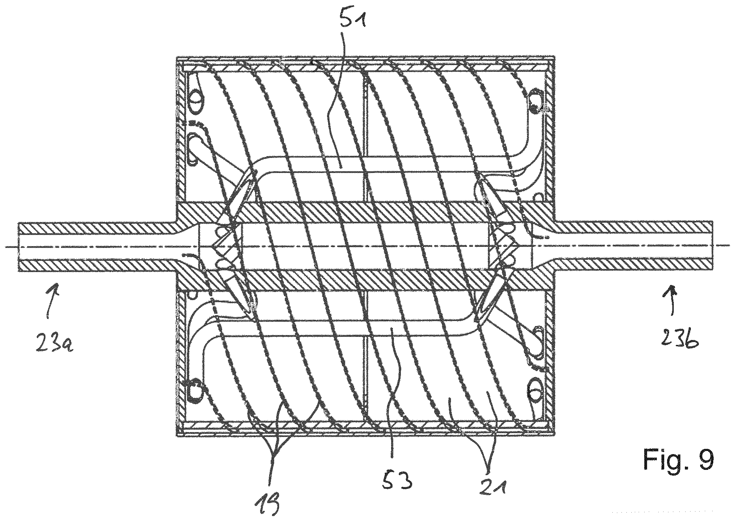

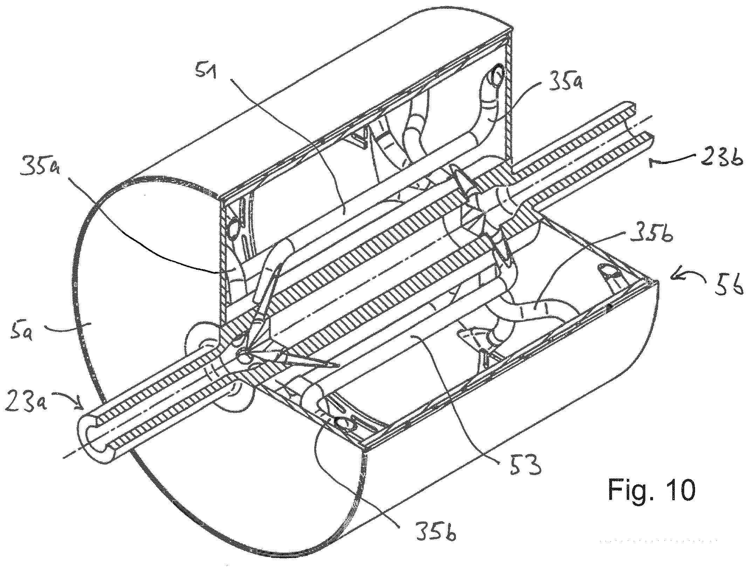

Dies ist anhand der Figuren 9 und 10 dargestellt. Dazu ist es erforderlich, dass von der Zuführleitung 25 nicht nur zuführleitungsseitig Steigleitungen 35a Kühlmedium zu den Kühlkanälen 21 weiter befördert, sondern dass ein Teil des Kühlmediums über Zwischenleitungen 51 zu Steigleitungen 35a transportiert wird, die innerhalb der Kühlwalze 1 an der gegenüberliegenden Stirnseite 5b vorgesehen sind.

Ebenso ist die andere Hälfte der als Rückführleitungen 35b dienenden Leitungen nicht nur an der Abströmseite der Kühlwalze 1 sondern zur Hälfte auch an der Zuströmseite der Kühlwalze 1 innenliegend benachbart zur Stirnseite 5a vorgesehen. Diese Steigleitungen 35b sind dann ebenfalls über bevorzugt parallel zur Zentralachse 3 verlaufende Zwischenleitungen 53 mit einem Sammelraum 55 verbunden, der direkt in die Ausströmleitung 27 in den gegenüberliegenden Walzenstummel 23b übergeht. In diesen Sammelraum 55 münden auch die Rückführleitungen 35b, die auf der rückführseitigen Stirnseite 5b innerhalb der Kühlwalze 1 vorgesehen sind.

Im Rahmen der erläuterten Ausführungsbeispiele ist teilweise von Kühlmedium, Kühlflüssigkeit oder Kühlmittel gesprochen worden. Es handelt sich insoweit stets um eine entsprechende Kühlsubstanz, wobei die Begriffe als Synonym verwendet werden.

Unabhängig davon, ob ein Gleichstromprinzip (wie in Figur 7a und 7b gezeigt ist) oder ein Gegenstromprinzip (wie in Figur 8a und 8b gezeigt ist) umgesetzt wird, lässt sich eine weitere Verbesserung in der Gleichmäßigkeit des Kühleffektes und damit eine Verbesserung der Eigenschaften des Schmelzefilmes (Castfilms) dadurch realisieren, wenn die Kühlkanäle von ihrer Zulaufseite zu ihrer Ausströmseite degressiv ausgestaltet sind, d.h. über ihre Länge zumindest abschnittsweise mit einem sich in Durchströmrichtung verjüngenden Durchströmquerschnitt versehen sind. Dadurch verändert sich über die Länge des Kühlkanals die Strömungsgeschwindigkeit des Kühlmediums. Hierdurch kann sichergestellt werden, dass die Erwärmung des Kühlmediums über die spiralförmigen Kühlkanäle hinweg durch die höhere Strömungsgeschwindigkeit und damit durch einen höheren Wärmeübergang ausgeglichen wird und damit die Kühlleistung zwischen der Zuströmseite an den Kühlkanälen 21 und der Abströmseite an den Kühlkanälen 21 gleich bleibt und somit zu einer gleichmäßigeren Kühlwirkung über die axiale Länge der Kühlwalze hinweg führt (im Gegensatz zu einer gleichbreiten Spirale). Da sich das Kühlmedium von der Zuström- zur Abströmseite zwangsläufig erwärmt (denn nur dadurch ist die Kühlung der Schmelze möglich) kann eine Vereinheitlichung und Vergleichmäßigung des Kühleffektes auch noch dadurch realisiert werden, dass benachbarte Kühlkanäle 21 oder beispielsweise benachbarte Doppelkühlkanäle 21 im Gegenstromprinzip durchströmt werden.

Als Kühlmittel kann jedes geeignete Kühlmittel in Betracht kommen. Es muss grundsätzlich lediglich fließ- und/oder strömungsfähig sein. Bevorzugt wird ein flüssiges Kühlmittel eingesetzt, das in der Regel aus Wasser bestehen kann oder bevorzugt hauptsächlich Wasser umfasst. Möglich wäre aber auch ein Kühlmittel auf der Basis von Öl zu verwenden. Schließlich wären auch dampfförmige oder gasförmige Kühlmittel möglich. Ebenso können aber auch Kühlmittel eingesetzt werden, egal ob sie flüssig oder gasförmig sind, die mit bestimmten Additiven versehen sind, wie beispielsweise Glykol. Ebenso könnte aber beispielsweise auch Glykol als Kühlmittel anstelle von Wasser oder auf der Basis von Wasser verwendet werden. Ganz allgemein bestehen also grundsätzlich insoweit keine Be- oder Einschränkungen.

Anhand der Beschreibung ist gezeigt worden, dass sich eine Verbesserung des Gesamtsystems und damit auch ein Castfilm mit verbesserten Eigenschaften herstellen lässt, wenn zumindest am Übergang vom Zulaufrohr zu den Steigrohren wie aber auch ergänzend oder alternativ am Übergang von den Steigrohren zu dem Abstandsraum und damit zu den Kühlkanälen im Zulaufbereich und/oder alternativ dazu bei einer entsprechenden Ausgestaltung des Übergangs vom Abstandsraum und damit den Kühlkanälen zu den ablaufseitigen Rücklaufleitungen und/oder alternativ dazu mit einem entsprechenden Übergang zwischen den Steigleitungen und den Zentralachsen vorgesehenen Rücklauf eine entsprechende ein- oder mehrstufige Strömungs-Umlenkeinrichtung ausgebildet oder vorgesehen ist, durch die sichergestellt werden kann, dass das Kühlmedium nicht mit exakt 90° auf eine Prallwand auftrifft sondern über eine nicht-rechtwinklige Anordnung der entsprechenden Rohr- oder Kanalabschnitte mit oder ohne separat ausgebildeter Strömungsumlenkeinrichtung eine jeweilige Umlenkung erzeugt wird, und zwar mit einer Winkeländerung von zumindest 92° oder bevorzugt mit zumindest 93°, 94° oder 95°. Diese Winkeländerung sollte dabei nicht größer als 178° sein, bevorzugt also ≤ 177°, 176° oder 175°.

Aus den erläuterten Ausführungsbeispielen geht auch hervor, dass z.B. ein an sich rechtwinkeliger Strömungsübergang erfindungsgemäß vermieden werden kann, wenn die Strömungsrichtungsänderung in eine zumindest zweistufige Strömungsrichtungsänderung aufgelöst wird, wobei jede Stufe nur eine Strömungsrichtungsänderung erzeugt, die für sich genommen nicht rechtwinkelig ist. Dies kann erfindungsgemäß in einer besonders bevorzugten Variante dadurch realisiert sein, dass ein Leitungsabschnitt X, der in einer Richtung X' ausgerichtet ist, einen Kühlmittelstrom in einer Richtung X" erzeugt, und dass auf diesem Leitungsabschnitt dann ein winklig dazu ausgerichteter Leitungsabschnitt Y mit einer Ausrichtung Y' zur Erzeugung eines Kühlmittelstroms in Richtung Y" folgt, auf den wiederum eine weitere Richtungsänderung zu einem nachfolgenden dritten Leitungsabschnitt in Richtung Z' folgt, so dass hier der Kühlmittelstrom von seiner vorausgehenden Richtung Y" in Z" nochmals abgelenkt wird, und dabei jede der beiden Winkeländerungen für sich genommen nicht rechtwinklig erfolgt.

Dabei ist besonders überraschend, dass durch diese technischen Maßnahmen letztlich die Qualität der darüber hergestellten Kunststofffolien deutlich verbessert werden kann, weil vor allem durch diese technischen Maßnahmen der Schmelzefilm (Castfilm) deutlich bessere Eigenschaften aufweist.

## Patentansprüche

1. Kühlwalze aufweisend folgende Merkmale:
- mit einem äußeren Walzenkörper (13), der eine äußere Walzenkühlfläche (9) und eine dem gegenüberliegende innere Kühlfläche (10) aufweist,
- mit einem inneren Walzenkörper (13), der eine äußere Walzenfläche (15) und vorzugsweise eine dem gegenüberliegende innere Walzenfläche (16) aufweist,
- zwischen dem äußeren Walzenkörper (7) und dem innerhalb des äußeren Walzenkörpers (7) angeordneten inneren Walzenkörper (13) ist ein einen Durchflussraum (11) bildender Abstandsraum (17) vorgesehen,
- in dem Abstandsraum (17) sind zwischen der inneren Kühlfläche (10) des äußeren Walzenkörpers (7) und der äußeren Walzenfläche (15) des inneren Walzenkörpers (13) Trennstege oder -wände (19) ausgebildet, wodurch seitlich versetzt zueinander liegende Kühlkanäle (21) im Abstandsraum (17) gebildet sind, die parallel zur Zentralachse (3) oder helixförmig um die Zentralachse (3) herumverlaufend angeordnet sind,
- an beiden gegenüberliegenden Stirnseiten (5; 5a, 5b) der Kühlwalze (1) ist jeweils ein Walzenstummel (23; 23a, 23b) vorgesehen,
- einer der beiden Walzenstummel (23; 23a, 23b) ist mit einer zentralen und in Richtung der Zentralachse (3) verlaufenden Zuführleitung (25) für ein Kühlmittel versehen,
- eine Ausströmleitung (27) ist in Richtung der Zentralachse (3) verlaufend an dem gegenüberliegenden Walzenstummel (23b) oder in dem auch die Zuführleitung (25) aufnehmenden Walzenstummel (23a) vorgesehen,
- zwischen der Zuführleitung (25) und dem Durchfluss- und Abstandsraum (11, 17) sowie zwischen dem Durchfluss- und Abstandsraum (11, 17) und der Ausströmleitung (27) sind jeweils Steigleitungen (35; 35a, 35b) vorgesehen, derart, dass zwischen der Zuführleitung (25), den nachfolgenden mehreren Steigleitungen (35; 35a), dem Durchfluss- und Abstandsraum (11, 17) und dem darin untergebrachten Kühlkanälen (21) sowie den nachfolgenden Steigleitungen (35; 35b) und der damit verbundenen Ausströmleitung (27) ein Kühlmittel-Durchflussleitungssystem (KD) gebildet ist,
- es sind Kühlmittel-Durchflussleitungssystem (KD) Strömungs-Umlenkeinrichtungen (41, 41'; 141, 141') vorgesehen, und zwar
a) zwischen der Zuführleitung (25) und den mehreren zulaufseitigen Steigleitungen (35; 35a) oder am Übergang von der Zuführleitung (25) zu den mehreren zulaufseitigen Steigleitungen (35; 35a), und
b) zwischen den mehreren abströmseitigen Steigleitungen (35; 35b) und der Abströmleitung (27) oder am Übergang zwischen den mehreren abströmseitigen Steigleitungen (35, 35b) und der Abströmleitung (27), und
c) zwischen den mehreren zulaufseitigen Steigleitungen (35; 35a) und dem Durchfluss- und Abstandsraum (11, 17) oder am Übergang zwischen den zulaufseitigen mehreren Steigleitungen (35; 35a) und dem Durchfluss- und Abstandsraum (11, 17) und
d) zwischen dem Durchfluss- und Abstandraum (11, 17) und den mehreren abströmseitigen Steigleitungen (35; 35b) oder am Übergang zwischen dem Durchfluss- und Abstandsraum (11, 17) und den mehreren abströmseitigen Steigleitungen (35; 35b),
- die Strömungs-Umlenkeinrichtungen (41, 41'; 141, 141') sind so ausgebildet, dass das Kühlmittel-Durchflussleitungenssystem (KD) im Bereich der Strömungs-Umlenkeinrichtungen (41, 41'; 141, 141') eine nicht-rechtwinklige Richtungsänderung in einem Winkel β, β', γ oder γ' durchläuft und/oder der durch dieses Kühlmittel-Durchflussleitungenssystem (KD) durchströmende Kühlmittelfluss im Bereich der Strömungs-Umlenkeinrichtungen (41, 41'; 141, 141') eine nicht-rechtwinklige Richtungsänderung in einem Winkel β, β', γ oder γ' erfährt,
**dadurch gekennzeichnet, dass** die Winkel β, β', γ oder γ' ≥ 120° und ≤ 178° sind.

2. Kühlwalze nach Anspruch 1, **gekennzeichnet durch** die folgenden Merkmale:
a) zwischen der Zuführleitung (25) und den mehreren zulaufseitigen Steigleitungen (35; 35a) oder am Übergang von der Zuführleitung (25) zu den mehreren zulaufseitigen Steigleitungen (35; 35a), und/oder
b) zwischen den mehreren abströmseitigen Steigleitungen (35; 35b) und der Abströmleitung (27) oder am Übergang zwischen den mehreren abströmseitigen Steigleitungen (35, 35b) und der Abströmleitung (27), und/oder
c) zwischen den mehreren zulaufseitigen Steigleitungen (35; 35a) und dem Durchfluss- und Abstandsraum (11, 17) oder am Übergang zwischen den zulaufseitigen mehreren Steigleitungen (35; 35a) und dem Durchfluss- und Abstandsraum (11, 17) und/oder
d) zwischen dem Durchfluss- und Abstandraum (11, 17) und dem mehreren abströmseitigen Steigleitungen (35; 35b) oder am Übergang zwischen dem Durchfluss- und Abstandsraum (11, 17) und den mehreren abströmseitigen Steigleitungen (35; 35b),
ist oder sind jeweils eine einstufige Strömungs-Umlenkeinrichtung (41, 141) unter Erzeugung einer Strömungsrichtungsänderung mit einem Winkel β oder γ oder zumindest eine doppelstufige Strömungs-Umlenkeinrichtung (41, 41'; 141, 141') vorgesehen, worüber in zumindest zwei Schritten eine erste und danach folgend eine zweite Strömungsrichtungsänderung mit dem Winkel β und β' bzw. γ und γ' erzeugbar ist.

3. Kühlwalze nach Anspruch 1 oder 2, **dadurch gekennzeichnet, dass** die Strömungs-Umlenkeinrichtung (41, 41'; 141, 141') eine oder mehrere Strömungsleitflächen (43, 43'; 143, 143') und/oder gekrümmte Leitungsabschnitte derart aufweist, dass ein entsprechender Kühlmittelleitungsabschnitt (X) mit einer Erstreckungsrichtung (X') unter Erzeugung eines Kühlmittelstromes in Strömungsrichtung (X") unmittelbar vor der Strömungs-Umlenkeinrichtungen (41, 41'; 141, 141') mit einem Winkel β, β', γ oder γ' in einen der Strömungs-Umlenkeinrichtungen (41, 41'; 141, 141') unmittelbar nachfolgenden Kühlmittel-Leitungsabschnitt (Y) mit einer Erstreckungsrichtung (Y') unter Erzeugung eines Kühlmittelstromes in Strömungsrichtung (Y") übergeht, und zwar unter Einschluss eines Winkels β, β', γ oder γ'.

4. Kühlwalze nach einem der Ansprüche 1 bis 3, **dadurch gekennzeichnet, dass** der Winkel β, β', γ und/oder γ' einen Wert aufweist, der
a) ≥ 130° oder zumindest ≥ 140°, 150°, 160° oder ≥ 170°, und
b) ≤ 177°, 176°, 175° oder zumindest ≤ 170°, ≤ 160°, 150°, 140° oder ≤ 130° ist.

5. Kühlwalze nach einem der Ansprüche 1 bis 4, **dadurch gekennzeichnet, dass** zwischen der Zuführleitung (25) und den zulaufseitigen mehreren Steigleitungen (35; 35a) eine zentrale Strömungs-Umlenkeinrichtung (41) und/oder zwischen den mehreren abströmseitigen Rücklaufleitungen (35; 35b) und der Ausströmleitung (27) zumindest eine zentrale Strömungs-Umlenkeinrichtung (41) vorgesehen ist, die vorzugsweise einen Umlenkkegel oder eine Umlenkpyramide (42) umfasst, die zu der den Umlenkkegel oder die Umlenkpyramide (42) durchsetzenden Zentralachse (3) symmetrisch ausgerichtet ist, wodurch eine Strömungs-Leitfläche (43) zur Umlenkung des Kühlmittelstromes gebildet wird, der in einem Winkel β gegenüber der Anströmrichtung (45; X") des Kühlmittels ausgerichtet ist.

6. Kühlwalze nach einem der Ansprüche 1 bis 5, **dadurch gekennzeichnet, dass** die zwischen den zulaufseitigen Steigleitungen (35; 35a) und dem Durchfluss- und Abstandsraum (11, 17) und/oder zwischen dem Durchfluss- und Abstandsraum (11, 17) und den abströmseitigen Rückstromleitungen (35; 35b) vorgesehenen Strömungs-Umlenkeinrichtungen (141, 141') jeweils zumindest eine äußere Strömungs-Umlenkeinrichtung (141, 141') umfassen, wobei die jeweils zumindest eine äußere Strömungs-Umlenkeinrichtung (141, 141')
a) vorzugsweise in Form eines Krümmers oder Bogenabschnittes ausgebildet sind und einen Teil der Steigleitungen (35; 35a) oder einen Teil der Rückführleitungen (35; 35b) bilden, oder
b) eine gegenüber der Anströmrichtung (X") des Kühlmittels in eine Winkel γ' geneigte Strömungsleitfläche (143') aufweist oder umfasst.

7. Kühlwalze nach Anspruch 6, **dadurch gekennzeichnet, dass** der dem Durchfluss- und Abstandsraum (11, 17) zugewandt liegende Endbereich der Steigleitungen (35; 35a) und/oder der Rücklaufleitungen (35; 35b) einen Teilbogen in einem Winkelbereich beschreibt, der ≥ 2°, 3°, 4°, 5° oder 10°, insbesondere ≥ 20°, 30°, 40°, 50°oder ≥ 60° und insbesondere ≤ 60°, 50°, 40°, 30°, und insbesondere ≤ 20° ist.

8. Kühlwalze nach einem der Ansprüche 1 bis 7, **dadurch gekennzeichnet, dass** die Kühlkanäle (21) als Doppelkühlkanäle (21) ausgebildet sind, die jeweils zulaufseitig mit einer ihnen zugeordneten Steigleitung (35; 35a) und abströmseitig mit einer ihnen zugeordneten Rückführleitung (35; 35b) in Verbindung stehen.

9. Kühlwalze nach einem der Ansprüche 1 bis 8, **dadurch gekennzeichnet, dass** die mit jeweils einer Steig- und/oder Rückführleitung (35; 35a, 35b) in Verbindung stehenden Kühlkanäle (21) als Doppel-Kühlkanäle (21; 21a, 21b) ausgebildet sind, die vorzugsweise bis auf einen Zu- und einen Abströmbereich im Durchfluss und Abstandsraum (11, 17) durch eine Zwischentrennwand (19') voneinander getrennt sind.

10. Kühlwalze nach einem der Ansprüche 1 bis 9, **dadurch gekennzeichnet, dass** die im Durchfluss- und Abstandsraum (11, 17) vorgesehenen Kühlkanäle (21) so mit den Steigleitungen (35, 35a) und/oder Rückführleitungen (35, 35b) verbunden sind, dass jeweils benachbarte Kanäle (21) im Gegenstromprinzip vom Kühlmittel durchströmbar sind.

11. Kühlwalze nach einem der Ansprüche 1 bis 10, **dadurch gekennzeichnet, dass** zwei benachbarte Kühlkanäle (21) oder zwei benachbarte Doppelkühlkanäle (21; (21a, 21b) im Gegenstromprinzip durchströmbar sind, wozu die Hälfte der zulaufseitigen Steigleitungen (35; 35a) an der einen Stirnseite (5; 5a) der Kühlwalze (1) und die andere Hälfte der zulaufseitig Steigleitung (35) an der gegenüberliegenden Stirnseite (5b) der Kühlwalze (1) mit Radialkomponente verlaufen, wobei die zur Zuführleitung (25) entfernt liegenden Steigleitungen (35; 35a) über Zwischenleitungen (51) mit dem Verbindungs- und/oder Verzweigungsraum (33) zulaufseitig verbunden sind.

12. Kühlwalze nach Anspruch 10 oder 11, **dadurch gekennzeichnet, dass** die Hälfte der abströmseitigen Rückführleitung (35; 35b) an der einen Stirnseite (5; 5a) und die andere Hälfte der abströmseitigen Rückführleitungen(35; 35b) an der gegenüberliegenden Stirnseite (5; 5b) im Inneren der Kühlwalze (1) mit Radialkomponente verlaufen, wobei die zur Ausströmleitung (27) entfernt liegenden abströmseitigen Rückführleitungen (35; 35b) über im Inneren der Kühlwalze (1) verlaufende Zwischenleitungen (53) mit dem entsprechenden Verbindungs- und/oder Sammelraum (33) insbesondere abströmseitig vor der Ausströmleitung (27) verbunden sind.

13. Kühlwalze nach einem der Ansprüche 1 bis 12, **dadurch gekennzeichnet, dass** die Kühlmittelkanäle (21) über ihre gesamte Länge hinweg oder zumindest auf einer Teillänge in Durchströmrichtung degressiv ausgestaltet sind, also mit einem sich verjüngenden Durchflussquerschnitt versehen sind.

14. Kühlwalze nach einem der Ansprüche 1 bis 13, **dadurch gekennzeichnet, dass** zumindest eine Strömungs-Umlenkeinrichtung in dem Kühlmitteldurchflussleitungssystem (KD) in zwei oder mehr Stufen oder Schritten ausgebildet ist, und zwar mit zwei oder mehr unmittelbar aufeinander folgender Strömungs-Umlenkeinrichtungen (41, 41'; 141, 141').

15. Kühlwalze nach einem der Ansprüche 1 bis 14, **dadurch gekennzeichnet, dass** im Bereich zumindest einer Strömungs-Umlenkeinrichtung (41, 41'; 141, 141') und vorzugsweise in mehreren oder allen Strömungs-Umlenkeinrichtungen (41, 41'; 141, 141') jeweils eine Beruhigungskammer (33; 133) vorgesehen ist, deren Durchströmquerschnitt größer ist als der Durchströmquerschnitt eines vorausgegangenen und/oder eines nachfolgenden Leitungsabschnittes (X; Y).

16. Kühlwalze nach Anspruch 15, **dadurch gekennzeichnet, dass** die Beruhigungskammer (33; 133)
- einen trichterförmigen Beruhigungskammerabschnitt (133'), oder
- einen zylinderförmigen Beruhigungskammerabschnitt (133"), oder
- einen trichterförmigen Beruhigungskammerabschnitt (133') mit einem in Strömungsrichtung nachgelagerten zylinderförmigen Beruhigungskammerabschnitt (133') umfasst.

17. Kühlwalze nach einem der Ansprüche 1 bis 16, **dadurch gekennzeichnet, dass** die Kühlwalze (1) so ausgebildet ist, dass deren Kühlkanäle (21) vom Kühlmittel im Gegenstromprinzip oder im Gleichstromprinzip durchströmbar sind.

18. Kühlwalze nach einem der Ansprüche 1 bis 17, **dadurch gekennzeichnet, dass** die Kühlwalze (1) so ausgebildet ist, dass die Kühlwalze (1) von flüssigem und/oder gasförmigen Kühlmittel durchströmbar ist, welches bevorzugt mit Additiven versetzt ist.

## Claims

1. Cooling roll having the following features:
- comprising an outer roll body (13) that comprises an outer roll cooling surface (9) and an opposing inner roll cooling surface (10),
- comprising an inner roll body (13) that comprises an outer roll surface (15) and preferably an opposing inner roll surface (16),
- a gap (17) forming a flow space (11) is provided between the outer roll body (7) and the inner roll body (13) that is arranged inside the outer roll body (7),
- separating ribs or walls (19) are formed in the gap (17), between the inner cooling surface (10) of the outer roll body (7) and the outer roll surface (15) of the inner roll body (13), which ribs or walls form mutually laterally offset cooling channels (21) in the gap (17), which channels are arranged in parallel with the central axis (3) or so as to extend around the central axis (3) in a helical manner,
- one roll journal (23; 23a, 23b), respectively, is provided on both of the opposing end faces (5; 5a, 5b) of the cooling roll (1),
- one of the two roll journals (23; 23a, 23b) is provided with a central supply line (25) for coolant which extends in the direction of the central axis (3),
- an outflow line (27) is provided on the opposing roll journal (23b) or in the roll journal (23a) that also receives the supply line (25), which outflow line extends in the direction of the central axis (3),
- in each case, rising pipes (35; 35a, 35b) are provided between the supply line (25) and the flow space and gap (11, 17), as well as between the flow space and gap (11, 17) and the outflow line (27), such that a coolant passage system (KD) is formed between the supply line (25), the following plurality of rising pipes (35; 35a), the flow space and gap (11, 17), and the cooling channels (21) accommodated therein, as well as the following rising pipes (35; 35b), and the outflow line (27) connected thereto,
- coolant passage system (KD) flow deflection means (41, 41'; 141, 141') are provided, specifically
a) between the supply line (25) and the plurality of rising pipes (35; 35a) on the supply side, or at the transition between the supply line (25) and the plurality of rising pipes (35; 35a) on the supply side, and
b) between the plurality of rising pipes (35; 35b) on the outflow side and the outflow line (27), or at the transition between the plurality of rising pipes (35, 35b) on the outflow side and the outflow line (27), and
c) between the plurality of rising pipes (35; 35a) on the supply side and the flow space and gap (11, 17), or at the transition between the plurality of rising pipes (35; 35a) on the supply side and the flow space and gap (11, 17), and
d) between the flow space and gap (11, 17) and the plurality of rising pipes (35; 35b) on the outflow side, or at the transition between the flow space and gap (11, 17) and the plurality of rising pipes (35; 35b) on the outflow side,
- the flow deflection means (41, 41'; 141, 141') are designed such that the coolant passage system (KD) undergoes a non-right-angled change in direction at an angle β, β', γ or γ', in the region of the flow deflection means (41, 41'; 141, 141'), and/or the coolant flow that flows through said coolant passages system (KD) undergoes a non-right-angled change in direction at an angle β, β', γ or γ', in the region of the flow deflection means (41, 41'; 141, 141'),
**characterised in that** the angles β, β', γ or γ' are ≥ 120° and ≤ 178°.

2. Cooling roll according to claim 1, **characterised by** the following features:
in each case a single-level flow deflection means (41, 141), bringing about a flow direction change having an angle β or γ, or at least one double-level flow deflection means (41, 41'; 141, 141'), is or are provided
a) between the supply line (25) and the plurality of rising pipes (35; 35a) on the supply side, or at the transition from the supply line (25) to the plurality of rising pipes (35; 35a) on the supply side, and/or
b) between the plurality of rising pipes (35; 35b) on the outflow side and the outflow line (27), or at the transition between the plurality of rising pipes (35, 35b) on the outflow side and the outflow line (27), and/or
c) between the plurality of rising pipes (35; 35a) on the supply side and the flow space and gap (11, 17), or at the transition between the rising pipes (35; 35a) on the supply side and the flow space and gap (11, 17), and/or
d) between the flow space and gap (11, 17) and the plurality of rising pipes (35; 35b) on the outflow side, or at the transition between the flow space and gap (11, 17) and the plurality of rising pipes (35; 35b) on the outflow side,
by means of which, in at least two steps, a first and subsequently a second flow direction change having the angle β and β', and γ and γ', respectively, can be brought about.

3. Cooling roll according to either claim 1 or claim 2, **characterised in that** the flow deflection means (41, 41'; 141, 141') comprises one or more flow guide surfaces (43, 43'; 143, 143') and/or curved line portions, such that a corresponding coolant line portion (X) having an extension direction (X') transitions, directly before the flow deflection means (41, 41'; 141, 141') and while generating a coolant stream in the flow direction (X"), at an angle β, β', γ or γ', into a coolant line portion (Y) that directly follows the flow deflection means (41, 41';, 141, 141') and has an extension direction (Y'), while generating a coolant stream in the flow direction (Y"), specifically enclosing an angle β, β', γ or γ'.

4. Cooling roll according to any of claims 1 to 3, **characterised in that** the angle β, β', γ and/or γ' has a value of
a) ≥ 130° or at least ≥ 140°, 150°, 160° or ≥ 170°, and
b) ≤ 177°, 176°, 175° or at least ≤ 170°, ≤ 160°, 150°, 140° or ≤ 130°.

5. Cooling roll according to any of claims 1 to 4, **characterised in that** a central flow deflection means (41) is provided between the supply line (25) and the plurality of rising pipes (35; 35a) on the supply side, and/or at least one central flow deflection means (41) is provided between the plurality of return lines (35; 35b) on the outflow side and the outflow line (27), which central flow deflection means preferably comprises a deflection cone or a deflection pyramid (42) which is oriented so as to be symmetrical with respect to the central axis (3) that passes through the deflection cone or the deflection pyramid (42), as a result of which a flow guide surface (43) for deflecting the coolant stream is formed, which surface is oriented so as to be at an angle β relative to the inflow direction (45; X") of the coolant.

6. Cooling roll according to any of claims 1 to 5, **characterised in that** the flow deflection means (141, 141') provided between the rising pipes (35; 35a) on the supply side and the flow space and gap (11, 17), and/or between the flow space and gap (11, 17) and the return line on the outflow side (35; 35b), each comprise at least one outer flow deflection means (141, 141'), the at least one outer flow deflection means (141, 141') in each case
a) preferably being designed in the form of an elbow or arc portion and forming a part of the rising pipes (35; 35a) or a part of the return lines (35; 35b), or
b) comprising or including a flow guide surface (143') that is inclined at an angle γ' relative to the inflow direction (X") of the coolant.

7. Cooling roll according to claim 6, **characterised in that** the end region of the rising pipes (35; 35a) facing the flow space and gap (11, 17), and/or the return lines (35; 35b) describes a partial arc in an angular range that is ≥ 2°, 3°, 4°, 5° or 10°, in particular ≥ 20°, 30°, 40°, 50° or ≥ 60°, and in particular ≤ 60°, 50°, 40°, 30° and in particular ≤ 20°.

8. Cooling roll according to any of claims 1 to 7, **characterised in that** the cooling channels (21) are designed as double cooling channels (21) which are each connected, at the supply side, to a rising pipe (35; 35a) associated therewith and, at the outflow side, to a return line (35; 35b) associated therewith.

9. Cooling roll according to any of claims 1 to 8, **characterised in that** the cooling channels (21) that are connected to a rising pipe and/or return line (35; 35a, 35b) in each case are designed as double cooling channels (21; 21a, 21b) which, with the exception of a supply region and an outflow region, are separated from one another by an intermediate separating wall (19') in the flow space and gap (11, 17).

10. Cooling roll according to any of claims 1 to 9, **characterised in that** the cooling channels (21) provided in the flow space and gap (11, 17) are connected to the rising pipes (35, 35a) and/or the return lines (35, 35b) such that coolant can flow through adjacent channels (21) in each case, in accordance with the counter-flow principle.

11. Cooling roll according to any of claims 1 to 10, **characterised in that** a flow can pass through two adjacent cooling channels (21) or two adjacent double cooling channels (21; (21a, 21b), in accordance with the counter-flow principle, for which purpose half of the rising pipes (35; 35a) on the supply side extend on one end face (5; 5a) of the cooling roll (1) and the other half of the rising pipes (35) on the supply side extend on the opposite end face (5b) of the cooling roll (1), in a manner having radial components, the rising pipes (35; 35a) remote from the supply line (25) being connected to the connection and/or branching space (33), on the supply side.

12. Cooling roll according to either claim 10 or claim 11, **characterised in that** half of the return lines (35; 35b) on the outflow side extend on one end face (5; 5a), and the other half of the return lines (35; 35b) on the outflow side extend on the opposing end face (5; 5b), inside the cooling roll (1), in a manner having radial components, the return lines (35; 35b) on the outflow side that are remote from the outflow line (27) being connected to the corresponding connection and/or storage space (33), by means of intermediate lines (53) extending inside the cooling roll (1), in particular in front of the outflow line (27) on the outflow side.

13. Cooling roll according to any of claims 1 to 12, **characterised in that** the coolant channels (21) are designed so as to diminish, over the entire length thereof or at least over a partial length, in the flow direction, i.e. are provided with a tapering flow cross section.

14. Cooling roll according to any of claims 1 to 13, **characterised in that** at least one flow deflection means in the coolant passage system (KD) is formed in two or more levels or steps, specifically having two or more directly successive flow deflection means (41, 41'; 141, 141').

15. Cooling roll according to any of claims 1 to 14, **characterised in that** a settling chamber (33; 133) is provided in each case, in the region of at least one flow deflection means (41, 41'; 141, 141') and preferably in a plurality of or all flow deflection means (41, 41'; 141, 141'), the flow cross section of which settling chamber is greater than the flow cross section of a preceding and/or of a following line portion (X; Y).

16. Cooling roll according to claim 15, **characterised in that** the settling chamber (33; 133) comprises:
- a funnel-shaped settling chamber portion (133'), or
- a cylindrical settling chamber portion (133"), or
- a funnel-shaped settling chamber portion (133') having a cylindrical settling chamber portion (133') that is connected downstream in the flow direction.

17. Cooling roll according to any of claims 1 to 16, **characterised in that** the cooling roll (1) is designed such that coolant can flow through the cooling channels (21) thereof in accordance with the counter-flow principle or in accordance with the direct-flow principle.

18. Cooling roll according to any of claims 1 to 17, **characterised in that** the cooling roll (1) is designed such that liquid and/or gaseous coolant can flow through the cooling roll (1), which coolant is mixed with additives.

## Revendications

1. Cylindre de refroidissement, comportant les éléments suivants :
- un corps de cylindre extérieur (13) qui comprend une surface de refroidissement extérieure (9) et une surface de refroidissement intérieure (10) opposée à celle-ci,
- un corps de cylindre intérieur (13) qui comprend une surface de cylindre extérieure (15) et de préférence une surface de cylindre intérieure (16) opposée à celle-ci,
- un volume d'espacement (17) formant un espace de passage (11) est prévu entre le corps de cylindre extérieur (7) et le corps de cylindre intérieur (13) disposé à l'intérieur du corps de cylindre extérieur (7),
- des barrettes ou des parois de séparation (19) sont réalisées dans le volume d'espacement (17) entre la surface de refroidissement intérieure (10) du corps de cylindre extérieur (7) et la surface de cylindre extérieure (15) du corps de cylindre intérieur, moyennant quoi des canaux de refroidissement (21) latéralement décalés les uns par rapport aux autres sont formés dans le volume d'espacement (17), qui sont disposés de manière à s'étendre parallèlement à l'axe central (3) ou en forme d'hélice autour de l'axe central (3),
- un tourillon de cylindre (23 ; 23a, 23b) respectif est prévu sur les deux faces frontales opposées (5 ; 5a, 5b) du cylindre de refroidissement (1),
- l'un des deux tourillons de cylindre (23 ; 23a, 23b) est pourvu d'une conduite d'alimentation centrale (25) pour un agent réfrigérant, qui s'étend en direction de l'axe central (3),
- une conduite de sortie (27) s'étendant en direction de l'axe central (3) est prévue sur le tourillon de cylindre opposé (23b) ou dans le tourillon de cylindre (23a) recevant également la conduite d'alimentation (25),
- des conduites montantes (35 ; 35a, 35b) sont prévues respectivement entre la conduite d'alimentation (25) et le volume de passage et d'espacement (11, 17) ainsi qu'entre le volume de passage et d'espacement (11, 17) et la conduite de sortie (27), de manière à former un système de passage de réfrigérant (KD) entre la conduite d'alimentation (25), lesdites plusieurs conduites montantes successives (35 ; 35a), le volume de passage et d'espacement (11, 17) et les canaux de refroidissement (21) qui y sont logés, ainsi que les conduites montantes successives (35 ; 35b) et la conduite de sortie (27) qui est reliée à celles-ci,
- dans le système de passage de réfrigérant (KD) sont prévus des moyens de déviation de flux (41, 41'; 141, 141'), à savoir
a) entre la conduite d'alimentation (25) et lesdites plusieurs conduites montantes (35 ; 35a) côté arrivée ou à la transition de la conduite d'alimentation (25) vers lesdites plusieurs conduites montantes (35 ; 35a) côté arrivée, et
b) entre lesdites plusieurs conduites montantes (35 ; 35b) côté sortie et la conduite de sortie (27) ou à la transition entre lesdites plusieurs conduites montantes (35 ; 35b) côté sortie et la conduite de sortie (27), et
c) entre lesdites plusieurs conduites montantes (35 ; 35a) côté arrivée et le volume de passage et d'espacement (11, 17) ou à la transition entre lesdites plusieurs conduites montantes (35 ; 35a) côté arrivée et le volume de passage et d'espacement (11, 17), et
d) entre le volume de passage et d'espacement (11, 17) et lesdites plusieurs conduites montantes (35 ; 35b) côté sortie ou à la transition entre le volume de passage et d'espacement (11, 17) et lesdites plusieurs conduites montantes (35 ; 35b) côté sortie,
- les moyens de déviation de flux (41, 41' ; 141, 141') sont réalisés de telle sorte qu'au niveau des moyens de déviation de flux (41, 41' ; 141, 141'), le système de passage de réfrigérant (KD) subit un changement de direction non rectangulaire selon un angle β, β', γ ou γ' et/ou telle sorte qu'au niveau des moyens de déviation de flux (41, 41' ; 141, 141') le flux de réfrigérant traversant ledit système de passage de réfrigérant (KD) subit un changement de direction non rectangulaire selon un angle β, β', γ ou γ', **caractérisé en ce que**
les angles β, β', γ ou γ' sont ≥ 120° et ≤ 178°.

2. Cylindre de refroidissement selon la revendication 1,
**caractérisé par** les éléments suivants :
a) entre la conduite d'alimentation (25) et lesdites plusieurs conduites montantes (35 ; 35a) côté arrivée ou à la transition de la conduite d'alimentation (25) vers lesdites plusieurs conduites montantes (35 ; 35a) côté arrivée, et/ou
b) entre lesdites plusieurs conduites montantes (35 ; 35b) côté sortie et la conduite de sortie (27) ou à la transition entre lesdites plusieurs conduites montantes (35 ; 35b) côté sortie et la conduite de sortie (27), et/ou
c) entre lesdites plusieurs conduites montantes (35 ; 35a) côté arrivée et le volume de passage et d'espacement (11, 17) ou à la transition entre lesdites plusieurs conduites montantes (35 ; 35a) côté arrivée et le volume de passage et d'espacement (11, 17) et/ou
d) entre le volume de passage et d'espacement (11, 17) et lesdites plusieurs conduites montantes (35 ; 35b) côté sortie ou à la transition entre le volume de passage et d'espacement (11, 17) et lesdites plusieurs conduites montantes (35 ; 35b) côté sortie,
est prévu ou sont prévus respectivement un moyen de déviation de flux (41, 141) à un seul étage, engendrant un changement de direction de flux selon un angle β ou γ ou au moins un moyen de déviation de flux (41, 41' ; 141, 141') à deux étages, engendrant en au moins deux étapes un premier changement de direction de flux et ensuite un second changement de direction de flux selon un angle β et β' ou γ et γ'.

3. Cylindre de refroidissement selon la revendication 1 ou 2,
**caractérisé en ce que**
le moyen de déviation de flux (41, 41' ; 141, 141') présente une ou plusieurs surfaces de guidage de flux (43, 43' ; 143, 143') et/ou des tronçons de conduite recourbés,
un tronçon de conduite de réfrigérant correspondant (X) ayant une direction d'extension (X') et engendrant un flux de réfrigérant en direction d'écoulement (X") se transforme, directement en avant des moyens de déviation de flux (41, 41' ; 141, 141') selon un angle β, β', γ ou γ', en un tronçon de conduite de réfrigérant (Y) directement successif aux moyens de déviation de flux (41, 41' ; 141, 141') et ayant une direction d'extension (Y'), en engendrant un flux de réfrigérant en direction d'écoulement (Y"), et ceci en définissant un angle β, β', γ ou γ'.

4. Cylindre de refroidissement selon l'une des revendications 1 à 3,
**caractérisé en ce que**
l'angle β, β', γ et/ou γ' présente une valeur qui est
a) ≥ 130° ou au moins ≥ 140°, 150°, 160° ou ≥ 170°, et
b) ≤ 177°, 176°, 175° ou au moins ≤ 170°, ≤ 160°, 150°, 140° ou ≤ 130°.

5. Cylindre de refroidissement selon l'une des revendications 1 à 4,
**caractérisé en ce que**
il est prévu un moyen de déviation de flux central (41) entre la conduite d'alimentation (25) et lesdites plusieurs conduites montantes (35 ; 35a) côté arrivée, et/ou il est prévu au moins un moyen de déviation de flux central (41) entre lesdites plusieurs conduites de retour (35 ; 35b) côté sortie et la conduite de sortie (27), qui comprend de préférence un cône de déviation ou une pyramide de déviation (42) qui est orienté(e) symétriquement par rapport à l'axe central (3) traversant le cône de déviation ou la pyramide de déviation (42), moyennant quoi une surface de guidage de flux (43) est formée pour dévier le flux de réfrigérant qui est orienté selon un angle β par rapport à la direction d'attaque (45 ; X") du réfrigérant.

6. Cylindre de refroidissement selon l'une des revendications 1 à 5,
**caractérisé en ce que**
les moyens de déviation de flux (141, 141') prévus entre les conduites montantes (35 ; 35a) côté arrivée et le volume de passage et d'espacement (11, 17) et/ou entre le volume de passage et d'espacement (11, 17) et les conduites de retour (35 ; 35b) côté sortie comprennent chacun au moins un moyen de déviation de flux extérieur (141, 141'), ledit au moins un moyen de déviation de flux extérieur (141, 141')
a) étant réalisé de préférence sous la forme d'un coude ou d'un tronçon arqué et formant une partie des conduites montantes (35 ; 35a) ou une partie des conduites de retour (35 ; 35b), ou
b) présentant ou comprenant une surface de guidage de flux (143') inclinée selon un angle γ' par rapport à la direction d'attaque (X") du réfrigérant.

7. Cylindre de refroidissement selon la revendication 6,
**caractérisé en ce que**
la zone d'extrémité des conduites montantes (35 ; 35a) et/ou des conduites de retour (35 ; 35b) tournée vers le volume de passage et d'espacement (11, 17) décrit un arc partiel selon une plage angulaire qui est ≥ 2°, 3°, 4°, 5° ou 10°, en particulier ≥ 20°, 30°, 40°, 50° ou ≥ 60°, et en particulier ≤ 60°, 50°, 40°, 30° et en particulier ≤ 20°.

8. Cylindre de refroidissement selon l'une des revendications 1 à 7,
**caractérisé en ce que**
les canaux de refroidissement (21) sont réalisés sous forme de canaux de refroidissement doubles (21) qui sont chacun en liaison, du côté arrivée, avec une conduite montante (35 ; 35a) qui leur est associée, et, du côté sortie, avec une conduite de retour (35 ; 35b) qui leur est associée.

9. Cylindre de refroidissement selon l'une des revendications 1 à 8,
**caractérisé en ce que**
les canaux de refroidissement (21) qui sont chacun en liaison avec une conduite montante et/ou de retour (35 ; 35a, 35b) sont réalisés sous forme de canaux de refroidissement doubles (21 ; 21a, 21b) qui sont séparés l'un de l'autre par une cloison de séparation (19'), de préférence exception faite d'une zone d'arrivée et de sortie dans le volume de passage et d'espacement (11, 17).

10. Cylindre de refroidissement selon l'une des revendications 1 à 3,
**caractérisé en ce que**
les canaux de refroidissement (21) prévus dans le volume de passage et d'espacement (11, 17) sont reliés aux conduites montantes (35, 35a) et/ou aux conduites de retour (35, 35b) de telle sorte que des canaux respectivement voisins (21) peuvent être traversés par le réfrigérant selon le principe de contre-courant.

11. Cylindre de refroidissement selon l'une des revendications 1 à 10,
**caractérisé en ce que**
deux canaux de refroidissement voisins (21) ou deux canaux de refroidissement doubles voisins (21 ; 21a, 21b) peuvent être traversés selon le principe de contre-courant, ce pourquoi la moitié des conduites montantes (35 ; 35a) côté arrivée s'étendent sur l'une des faces frontales (5 ; 5a) du cylindre de refroidissement (1) et l'autre moitié des conduites montantes (35) côté arrivée s'étendent sur la face frontale opposée (5b) du cylindre de refroidissement (1), avec une composante radiale, et les conduites montantes (35 ; 35a) éloignées de la conduite d'alimentation (25) sont reliées du côté arrivée au volume de liaison et/ou de ramification (33) via des conduites intermédiaires (51).

12. Cylindre de refroidissement selon la revendication 10 ou 11,
**caractérisé en ce que**
la moitié des conduites de retour (35 ; 35b) côté sortie s'étendent sur l'une des faces frontales (5 ; 5a) et l'autre moitié des conduites de retour (35 ; 35b) côté sortie s'étendent sur la face frontale opposée (5 ; 5b) à l'intérieur du cylindre de refroidissement (1), avec une composante radiale, et les conduites de retour (35 ; 35b) éloignées de la conduite de sortie (27) sont reliées au volume de liaison et/ou de collecte correspondant (33), en particulier du côté sortie en amont de la conduite de sortie (27), via des conduites intermédiaires (53) s'étendant à l'intérieur du cylindre de refroidissement (1).

13. Cylindre de refroidissement selon l'une des revendications 1 à 12,
**caractérisé en ce que**
les canaux de refroidissement (21) sont conçus de façon dégressive sur toute leur longueur ou au moins sur une longueur partielle en direction d'écoulement, ils sont donc pourvus d'une section transversale d'écoulement qui va en se rétrécissant.

14. Cylindre de refroidissement selon l'une des revendications 1 à 13,
**caractérisé en ce que**
au moins un moyen de déviation de flux dans le système de déviation de flux de réfrigérant (KD) est réalisé en deux ou en plusieurs étages ou étapes, à savoir avec deux ou plusieurs moyens de déviation de flux (41, 41' ; 141, 141') qui se succèdent directement.

15. Cylindre de refroidissement selon l'une des revendications 1 à 14,
**caractérisé en ce que**
au niveau d'au moins un moyen de déviation de flux (41, 41' ; 141, 141') et de préférence dans plusieurs ou dans tous les moyens de déviation de flux (41, 41' ; 141, 141') est prévue une chambre de tranquillisation respective (33 ; 133) dont la section transversale d'écoulement est supérieure à la section transversale d'écoulement d'un tronçon de conduite précédant et/ou successif (X ; Y).

16. Cylindre de refroidissement selon la revendication 15,
**caractérisé en ce que**
la chambre de tranquillisation (33 ; 133) comprend
- une portion de chambre de tranquillisation (133') en forme d'entonnoir, ou
- une portion de chambre de tranquillisation (133") en forme de cylindre, ou
- une portion de chambre de tranquillisation (133') en forme d'entonnoir ayant une portion de chambre de tranquillisation (133') en forme de cylindre disposée à la suite en direction d'écoulement.

17. Cylindre de refroidissement selon l'une des revendications 1 à 16,
**caractérisé en ce que**
le cylindre de refroidissement (1) est réalisé de telle sorte que ses canaux de refroidissement (21) peuvent être traversés par le réfrigérant selon le principe de contre-courant ou selon le principe de courant parallèle.

18. Cylindre de refroidissement selon l'une des revendications 1 à 17,
**caractérisé en ce que**
le cylindre de refroidissement (1) est réalisé de telle sorte que le cylindre de refroidissement (1) peut être traversé par un réfrigérant liquide et/ou gazeux qui est de préférence chargé d'additifs.
